# EUROPÄISCHE PATENTSCHRIFT

(11) **EP 2 852 649 B1**
(45) Veröffentlichungstag und Bekanntmachung des Hinweises auf die Patenterteilung: **09.08.2017**
(21) Anmeldenummer: 13727818.0
(22) Anmeldetag: 22.05.2013
(51) Int. Cl.: C08G 18/10, C09J 175/04, C08G 18/75, C08G 18/76, C08G 18/28, C08G 18/48, C09J 175/08, C08G 18/83, C07F 7/18, C08G 18/71

(54) **SILANGRUPPEN-HALTIGES POLYMER**
POLYMER CONTAINING SILANE GROUPS
POLYMÈRE CONTENANT DES GROUPES DE SILANE

(30) Priorität: 23.05.2012 EP 12169150
(43) Veröffentlichungstag der Anmeldung: 01.04.2015
(73) Patentinhaber: Sika Technology AG, 6340 Baar (CH)
(72) Erfinder: KRAMER, Andreas, CH-8006 Zürich (CH); BURCKHARDT, Urs, CH-8049 Zürich (CH)
(74) Vertreter: Sika Patent Attorneys
(86) Internationale Anmeldenummer: PCT/EP2013/060553
(87) Internationale Veröffentlichungsnummer: WO 2013/174891

(56) Entgegenhaltungen:
- DE-A1-102007 032 666
- US-A- 5 587 502
- DATABASE WPI Week 197817 Thomson Scientific, London, GB; AN 1978-31592A XP002686132, & SU 555 104 A1 (SEREBRENNIKOVA E V) 25. April 1977 (1977-04-25)

## Beschreibung

### Technisches Gebiet

Die Erfindung betrifft Silangruppen-haltige Polymere und ihre Verwendung als Bestandteil von feuchtigkeitshärtenden Zusammensetzungen, welche insbesondere zum Verkleben, Abdichten und Beschichten von Bau- und Industrieprodukten einsetzbar sind.

### Stand der Technik

Silangruppen-haltige Polymere, auch "silanfunktionelle Polymere" oder "silanterminierte Polymere" oder "STP" genannt, werden seit einiger Zeit erfolgreich als Bindemittelsystem in feuchtigkeitshärtenden Zusammensetzungen eingesetzt, die insbesondere als isocyanatfreie elastische Klebstoffe, Dichtstoffe und Beschichtungen in der Bau- und Fertigungsindustrie Verwendung finden.

Ein einfach durchzuführender Weg zu Silangruppen-haltigen Polymeren, der von breit erhältlichen Rohstoffen ausgeht und damit kommerziell attraktiv ist, führt über die Umsetzung von Aminosilanen mit Isocyanatgruppen-haltigen Polyurethanpolymeren, wobei die Silangruppen schliesslich über Harnstoffgruppen ans Polymer gebunden sind. Die so erhältlichen Silangruppen-haltigen Polymere weisen aber eine eher hohe Viskosität auf, was das Formulieren von Zusammensetzungen mit guter Verarbeitbarkeit erschwert, und ihre Beständigkeit gegenüber thermischer Belastung im ausgehärteten Zustand ist im Temperaturbereich von 80 °C oder darüber eingeschränkt.

Interessante Eigenschaften in Bezug auf Viskosität und Wärmebeständigkeit weisen Silangruppen-haltige Polymere auf, deren Silangruppen über Urethananstelle von Harnstoffgruppen ans Polymer gebunden sind. Solche Silangruppen-haltige Polymere sind als Umsetzungsprodukte von Polyolen mit Isocyanatosilanen bekannt. Dieser Weg ist aber nur von beschränktem Interesse, da Isocyanatosilane teuer, wenig lagerfähig und stark toxisch sind. Attraktiver wäre die Umsetzung von Isocyanatgruppen-haltigen Polyurethanpolymeren mit Hydroxysilanen.

US 5,587,502 offenbart Hydroxylgruppen aufweisende Silane, erhalten durch Umsetzen von Aminosilanen mit cyclischen Alkylencarbonaten, und von diesen ausgehende Silangruppen-haltige Polymere. Diese Silangruppen-haltigen Polymere weisen aber ebenfalls unbefriedigende Wärmebeständigkeiten auf.

### Darstellung der Erfindung

Aufgabe der vorliegenden Erfindung ist es daher, ein Silangruppen-haltiges Polymer zur Verfügung zu stellen, welches eine tiefe Viskosität aufweist und mit Feuchtigkeit zu einem elastischen Material mit einer guten Wärmebeständigkeit aushärtet.

Überraschenderweise wurde gefunden, dass ein Polymer nach Anspruch 1 diese Aufgabe löst. Es weist eine tiefe Viskosität und eine ausgezeichnete Lagerstabilität auf und härtet mit Feuchtigkeit schnell zu einem elastischen Material mit guter Festigkeit, Dehnbarkeit und Wärmebeständigkeit aus. Das Polymer ist in einem einfachen Verfahren ausgehend von Isocyanatgruppen-haltigen Polyurethanpolymeren und speziellen Hydroxysilanen mit sekundärer OH-Gruppe überraschend selektiv herstellbar.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Gegenstand der Erfindung ist ein Polymer mit Endgruppen der Formel (I), welches frei ist von Isocyanatgruppen, 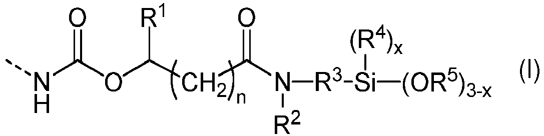 wobei
R¹ für eine Alkylgruppe mit 1 bis 12 C-Atomen steht;
R² für ein Wasserstoffatom oder für eine Alkylgruppe mit 1 bis 12 C-Atomen, welche gegebenenfalls Ether-Sauerstoff oder Amin-Stickstoff aufweist, steht; R³ für einen linearen oder verzweigten Alkylen- oder Cycloalkylenrest mit 1 bis 12 C-Atomen, gegebenenfalls mit aromatischen Anteilen, und gegebenenfalls mit einem oder mehreren Heteroatomen, insbesondere Stickstoffatomen, steht;
R⁴ für eine Alkylgruppe mit 1 bis 6 C-Atomen steht;
R⁵ für eine Alkylgruppe mit 1 bis 10 C-Atomen, welche gegebenenfalls eine oder mehrere Ether-Sauerstoffe aufweist, steht;
n für 2 oder 3 oder 4 steht; und
x für 0 oder 1 steht.

Im vorliegenden Dokument bezeichent der Begriff "Silan" beziehungsweise "Organosilan" Verbindungen, welche einerseits mindestens eine, üblicherweise zwei oder drei, über Si-O-Bindungen direkt ans Siliciumatom gebundene Alkoxygruppen aufweisen, und andererseits mindestens einen über eine Si-C-Bindung direkt ans Siliciumatom gebundenen organischen Rest aufweisen. Entsprechend bezeichnet der Begriff "Silangruppe" ein Silan, welches via seinen organischen Rest gebunden ist.
Als "Aminosilan", "Hydroxysilan", "Isocyanatosilan" und dergleichen werden Organosilane bezeichnet, welche am organischen Rest eine entsprechende funktionelle Gruppe, also eine Aminogruppe, Hydroxygruppe oder Isocyanatgruppe, aufweisen.
Mit "Poly" beginnende Substanznamen wie Polyol oder Polyisocyanat bezeichnen Substanzen, die formal zwei oder mehr der in ihrem Namen vorkommenden funktionellen Gruppen pro Molekül enthalten.
Der Begriff "Polyurethanpolymer" umfasst sämtliche Polymere, welche nach dem sogenannten Diisocyanat-Polyadditions-Verfahren hergestellt werden. Der Begriff "Polyurethanpolymer" umfasst auch Isocyanatgruppen aufweisende Polyurethanpolymere, wie sie aus der Umsetzung von Polyisocyanaten und Polyolen erhältlich sind und selber Polyisocyanate darstellen und oft auch Prepolymere genannt werden.
Unter "Molekulargewicht" von Oligomeren oder Polymeren versteht man im vorliegenden Dokument das Molekulargewichtsmittel Mₙ (Zahlenmittel), welches typischerweise mittels GPC gegen Polystyrol als Standard bestimmt wird.

Bei den Endgruppen der Formel (I) handelt es sich Silangruppen. Silangruppen haben die Eigenschaft, bei Kontakt mit Feuchtigkeit zu hydrolysieren. Dabei bilden sich Silanolgruppen (Si-OH-Gruppen) und durch nachfolgende Kondensationsreaktionen Siloxangruppen (Si-O-Si-Gruppen).

R¹ steht bevorzugt für eine lineare Alkylgruppe mit 2 bis 8, insbesondere 4 bis 6, C-Atomen. Ein solches Polymer weist eine besonders tiefe Viskosität und eine besonders gute Lagerstabilität auf.
R¹ steht weiterhin bevorzugt für eine Methylgruppe. Ein solches Polymer ermöglicht besonders hohe Festigkeiten und besonders gute Wärmestabilitäten.

Besonders bevorzugt steht der Rest R¹ für einen Rest R^{1a}, wobei R^{1a} für n-Butyl, n-Pentyl, n-Hexyl, n-Heptyl oder n-Octyl, insbesondere für n-Butyl, n-Pentyl oder n-Hexyl, steht. Ein solches Polymer weist eine besonders tiefe Viskosität und eine besonders gute Lagerstabilität auf und ermöglicht besonders gute Wärmebeständigkeiten.
R² steht bevorzugt für ein Wasserstoffatom. Ein solches Polymer ist besonders gut zugänglich und ermöglicht eine besonders gute Wärmebeständigkeit. R³ steht bevorzugt für einen linearen oder verzweigten Alkylenrest mit 1 bis 6 C-Atomen.

Besonders bevorzugt ist der Rest R³ ausgewählt aus der Gruppe bestehend aus 1,3-Propylen, 2-Methyl-1,3-propylen, 1,4-Butylen, 3-Methyl-1,4-butylen und 3,3-Dimethyl-1,4-butylen. Davon besonders bevorzugt sind 1,3-Propylen und 3,3-Dimethyl-1,4-butylen, insbesondere 1,3-Propylen.
R⁴ steht bevorzugt für eine Methylgruppe.
R⁵ steht bevorzugt für eine Methylgruppe oder eine Ethylgruppe oder eine Hept-3,6-dioxa-1-ylgruppe, besonders bevorzugt für eine Methylgruppe oder eine Ethylgruppe.
n steht bevorzugt für 2 oder 3, insbesondere für 2.
Die Polymere mit diesen bevorzugten Resten R³, R⁴, R⁵ und n sind abgeleitet von besonders gut zugänglichen Hydroxysilanen.
R⁵ steht besonders bevorzugt für eine Ethylgruppe. Diese Polymere sind besonders lagerstabil und spalten bei ihrer Aushärtung kein Methanol ab, was aus toxikologischen Gründen vorteilhaft ist.

Bevorzugt steht x für 0. Diese Polymere hydrolysieren bei Kontakt mit Feuchtigkeit besonders schnell und ermöglichen gute mechanische Eigenschaften.

Bevorzugt weist das Polymer mit Endgruppen der Formel (I) ein Molekulargewicht im Bereich von 1'000 bis 30'000 g/mol, bevorzugt 2'000 bis 25'000 g/mol, besonders bevorzugt 3'000 bis 20'000 g/mol, und insbesondere von 4'000 bis 15'000 g/mol, auf. Ein solches Polymer ermöglicht gute mechanische Eigenschaften.

Bevorzugt weist das Polymer mit Endgruppen der Formel (I) mehrheitlich Polyoxyalkyleneinheiten, besonders bevorzugt Polyoxyethylen- und/oder Polyoxypropyleneinheiten, insbesondere Polyoxypropyleneinheiten, auf. Ein solches Polymer weist eine tiefe Viskosität auf und ermöglicht gute mechanische Eigenschaften.

Die Endgruppen der Formel (I) sind insbesondere mehrheitlich an cycloaliphatische Reste gebunden. Ein solches Polymer weist besonders tiefe Viskositäten auf und ist besonders lichtstabil.

Bevorzugt weist das Polymer 1 bis 4, besonders bevorzugt 1 bis 3, insbesondere 2 oder 3, am meisten bevorzugt 2, Endgruppen der Formel (I) auf. Ein solches Polymer ermöglicht gute mechanische Eigenschaften, insbesondere eine hohe Dehnbarkeit.

Weiterhin betrifft die vorliegende Erfindung ein Verfahren zur Herstellung eines Polymers mit Endgruppen der Formel (I) durch Umsetzung mindestens eines Hydroxysilans der Formel (II) mit mindestens einem Isocyanatgruppen-haltigen Polyurethanpolymer.

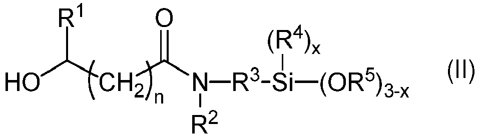

In der Formel (II) weisen R¹, R², R³, R⁴, R⁵, n und x die bereits genannten Bedeutungen auf.
Bei dieser Umsetzung werden die Hydroxylgruppen mindestens im stöchiometrischen, bevorzugt in einem leicht überstöchiometrischen Verhältnis, gegenüber den Isocyanatgruppen eingesetzt. Insbesondere wird ein OH/NCO-Verhältnis von 1.0 bis 1.25 verwendet. Die Umsetzung wird bevorzugt bei einer Temperatur im Bereich von 20 °C bis 120 °C, insbesondere 50 °C bis 100 °C, durchgeführt. Bevorzugt wird dabei mindestens ein Katalysator eingesetzt, insbesondere eine Bismut(III)-, Zink(II)- oder Zinn(II)-Verbindung oder eine Organozinn-Verbindung.

Ein weiterer Gegenstand der vorliegenden Erfindung ist ein Hydroxysilan der Formel (II a), welches ein bevorzugtes Hydroxysilan der Formel (II) darstellt.

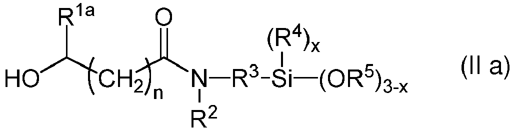

In der Formel (II a) steht Erz für n-Butyl, n-Pentyl, n-Hexyl, n-Heptyl oder n-Octyl, insbesondere für n-Butyl, n-Pentyl oder n-Hexyl; und R², R³, R⁴, R⁵, n und x weisen die bereits genannten Bedeutungen auf.
Das Hydroxysilan der Formel (II a) weist besondere Vorteile auf. Es ist aus kaum toxischen, gut erhältlichen Ausgangsstoffen in einem einfachen Verfahren überraschend selektiv herstellbar und zeigt eine besonders geringe Neigung zu Selbstkondensation. Ausgehend von ihm sind besonders niedrigviskose, lagerstabile Polymere mit Endgruppen der Formel (I) zugänglich.

Bevorzugt ist das Hydroxysilan der Formel (II a) ausgewählt aus der Gruppe bestehend aus N-(3-Trimethoxysilylpropyl)-4-hydroxyoctanamid, N-(3-Triethoxysilylpropyl)-4-hydroxyoctanamid, N-(2,2-Dimethyl-4-trimethoxysilylbutyl)-4-hydroxyoctanamid, N-(2,2-Dimethyl-4-triethoxysilylbutyl)-4-hydroxyoctanamid, N-(3-Trimethoxysilylpropyl)-4-hydroxynonanamid, N-(3-Triethoxysilylpropyl)-4-hydroxynonanamid, N-(2,2-Dimethyl-4-trimethoxysilylbutyl)-4-hydroxynonanamid, N-(2,2-Dimethyl-4-triethoxysilylbutyl)-4-hydroxynonanamid, N-(3-Trimethoxysilylpropyl)-4-hydroxydecanamid, N-(3-Triethoxysilylpropyl)-4-hydroxydecanamid, N-(2,2-Dimethyl-4-trimethoxysilylbutyl)-4-hydroxydecanamid, N-(2,2-Dimethyl-4-triethoxysilylbutyl)-4-hydroxydecanamid, N-(3-Trimethoxysilylpropyl)-4-hydroxyundecanamid, N-(3-Triethoxysilylpropyl)-4-hydroxyundecanamid, N-(2,2-Dimethyl-4-trimethoxysilylbutyl)-4-hydroxyundecanamid, N-(2,2-Dimethyl-4-triethoxysilylbutyl)-4-hydroxyundecanamid, N-(3-Trimethoxysilylpropyl)-4-hydroxydodecanamid, N-(3-Triethoxysilylpropyl)-4-hydroxydodecanamid, N-(2,2-Dimethyl-4-trimethoxysilylbutyl)-4-hydroxydodecanamid, N-(2,2-Dimethyl-4-triethoxysilylbutyl)-4-hydroxydodecanamid, N-(3-Trimethoxysilylpropyl)-5-hydroxynonanamid, N-(3-Triethoxysilylpropyl)-5-hydroxynonanamid, N-(2,2-Dimethyl-4-trimethoxysilylbutyl)-5-hydroxynonanamid, N-(2,2-Dimethyl-4-triethoxysilylbutyl)-5-hydroxynonanamid, N-(3-Trimethoxysilylpropyl)-5-hydroxydecanamid, N-(3-Triethoxysilylpropyl)-5-hydroxydecanamid, N-(2,2-Dimethyl-4-trimethoxysilylbutyl)-5-hydroxydecanamid, N-(2,2-Dimethyl-4-triethoxysilylbutyl)-5-hydroxydecanamid, N-(3-Trimethoxysilylpropyl)-5-hydroxyundecanamid, N-(3-Triethoxysilylpropyl)-5-hydroxyundecanamid, N-(2,2-Dimethyl-4-trimethoxysilylbutyl)-5-hydroxyundecanamid, N-(2,2-Dimethyl-4-triethoxysilylbutyl)-5-hydroxyundecanamid, N-(3-Trimethoxysilylpropyl)-5-hydroxydodecanamid, N-(3-Triethoxysilylpropyl)-5-hydroxydodecanamid, N-(2,2-Dimethyl-4-trimethoxysilylbutyl)-5-hydroxydodecanamid, N-(2,2-Dimethyl-4-triethoxysilylbutyl)-5-hydroxydodecanamid, N-(3-Trimethoxysilylpropyl)-6-hydroxydecanamid, N-(3-Triethoxysilylpropyl)-6-hydroxydecanamid, N-(2,2-Dimethyl-4-trimethoxysilylbutyl)-6-hydroxydecanamid, N-(2,2-Dimethyl-4-triethoxysilylbutyl)-6-hydroxydecanamid, N-(3-Trimethoxysilylpropyl)-6-hydroxyundecanamid, N-(3-Triethoxysilylpropyl)-6-hydroxyundecanamid, N-(2,2-Dimethyl-4-trimethoxysilylbutyl)-6-hydroxyundecanamid, N-(2,2-Dimethyl-4-triethoxysilylbutyl)-6-hydroxyundecanamid, N-(3-Trimethoxysilylpropyl)-6-hydroxydodecanamid, N-(3-Triethoxysilylpropyl)-6-hydroxydodecanamid, N-(2,2-Dimethyl-4-trimethoxysilylbutyl)-6-hydroxydodecanamid und N-(2,2-Dimethyl-4-triethoxysilylbutyl)-6-hydroxydodecanamid.
Besonders bevorzugt sind die Silylpropylverbindungen. Diese Hydroxysilane sind besonders gut zugänglich.

Besonders bevorzugt sind weiterhin die Verbindungen, bei welchen die OH-Gruppe in 4- oder 5-Stellung, insbesondere in 4-Stellung, steht. Diese Hydroxysilane sind besonders gut zugänglich.
Besonders bevorzugt sind weiterhin die Triethoxysilyl-Verbindungen. Diese Hydroxysilane sind besonders lagerstabil und setzen kein Methanol frei.

Ein zur Umsetzung mit mindestens einem Hydroxysilan der Formel (II) geeignetes Isocyanatgruppen-haltiges Polyurethanpolymer wird insbesondere erhalten durch Umsetzung von mindestens einem Polyol mit mindestens einem Polyisocyanat, insbesondere einem Diisocyanat. Diese Umsetzung kann dadurch erfolgen, dass das Polyol und das Polyisocyanat mit üblichen Verfahren, insbesondere bei Temperaturen von 50 °C bis 100 °C, gegebenenfalls unter Mitverwendung geeigneter Katalysatoren, zur Reaktion gebracht werden, wobei das Polyisocyanat so dosiert ist, dass dessen Isocyanatgruppen im Verhältnis zu den Hydroxylgruppen des Polyols im stöchiometrischen Überschuss vorhanden sind. Insbesondere wird der Überschuss an Polyisocyanat so gewählt, dass im resultierenden Polyurethanpolymer nach der Umsetzung aller Hydroxylgruppen des Polyols ein Gehalt an freien Isocyanatgruppen von 0.1 - 5 Gew.-%, bevorzugt 0.1 - 2.5 Gew.-%, besonders bevorzugt 0.2 - 1 Gew.-%, bezogen auf das gesamte Polymer verbleibt. Bevorzugt sind Polyurethanpolymere mit dem genannten Gehalt an freien Isocyanatgruppen, welche aus der Umsetzung von Diisocyanaten mit hochmolekularen Diolen in einem NCO/OH-Verhältnis von 1.5 / 1 bis 2.2 / 1, insbesondere 1.8 / 1 bis 2.0 / 1, erhalten werden. Gegebenenfalls kann das Polyurethan polymer unter Mitverwendung von Weichmachern hergestellt werden, wobei die verwendeten Weichmacher keine gegenüber Isocyanaten reaktive Gruppen enthalten.

Als Polyol für die Herstellung eines Isocyanatgruppen-haltigen Polyurethanpolymers geeignet sind insbesondere die folgenden handelsüblichen Polyole oder beliebige Mischungen davon:
- Polyoxyalkylenpolyole, auch Polyetherpolyole oder Oligoetherole genannt, welche Polymerisationsprodukte von Ethylenoxid, 1,2-Propylenoxid, 1,2- oder 2,3-Butylenoxid, Oxetan, Tetrahydrofuran oder Mischungen davon sind, eventuell polymerisiert mit Hilfe eines Startermoleküls mit zwei oder mehreren aktiven Wasserstoffatomen wie beispielsweise Wasser, Ammoniak oder Verbindungen mit mehreren OH- oder NH-Gruppen wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, Bisphenol A, hydriertes Bisphenol A, 1,1,1-Trimethylolethan, 1,1,1-Trimethylolpropan, Glycerin, Anilin, sowie Mischungen der vorgenannten Verbindungen. Bevorzugt sind Polyoxyalkylenpolyole, die einen niedrigen Ungesättigtheitsgrad aufweisen (gemessen nach ASTM D-2849-69 und angegeben in Milliequivalent Ungesättigtheit pro Gramm Polyol (mEq/g)), hergestellt beispielsweise mit Hilfe von sogenannten Double Metal Cyanide Complex-Katalysatoren (DMC-Katalysatoren).
   Besonders geeignet sind Polyoxyalkylendiole oder Polyoxyalkylentriole, insbesondere Polyoxyethylen- und Polyoxypropylendi- und -triole.
   Weiterhin besonders geeignet sind sogenannte Ethylenoxid-terminierte (EOendcapped) Polyoxypropylenpolyole. Letztere sind Polyoxyethylen-polyoxypropylen-Mischpolyole, die beispielsweise dadurch erhalten werden, dass Polyoxypropylenpolyole nach Abschluss der Polypropoxylierungsreaktion mit Ethylenoxid weiter alkoxyliert werden und dadurch primäre Hydroxylgruppen aufweisen.
- Styrol-Acrylnitril- oder Acrylnitril-Methylmethacrylat-gepfropfte Polyetherpolyole.
- Polyesterpolyole, auch Oligoesterole genannt, hergestellt nach bekannten Verfahren, insbesondere der Polykondensation von Hydroxycarbonsäuren oder der Polykondensation von aliphatischen und/oder aromatischen Polycarbonsäuren mit zwei- oder mehrwertigen Alkoholen.
   Als Polyesterpolyole insbesondere geeignet sind solche, welche hergestellt sind aus zwei- bis dreiwertigen, insbesondere zweiwertigen, Alkoholen, wie beispielsweise Ethylenglykol, Diethylenglykol, Propylenglykol, Dipropylenglykol, Neopentylglykol, 1,4-Butandiol, 1,5-Pentandiol, 3-Methyl-1,5-hexandiol, 1,6-Hexandiol, 1,8-Octandiol, 1,10-Decandiol, 1,12-Dodecandiol, 1,12-Hydroxystearylalkohol, 1,4-Cyclohexandimethanol, Dimerfettsäurediol (Dimerdiol), Hydroxypivalinsäureneopentylglykolester, Glycerin, 1,1,1-Trimethylolpropan oder Mischungen der vorgenannten Alkohole, mit organischen Di- oder Tricarbonsäuren, insbesondere Dicarbonsäuren, oder deren Anhydride oder Ester, wie beispielsweise Bernsteinsäure, Glutarsäure, Adipinsäure, Trimethyladipinsäure, Korksäure, Azelainsäure, Sebacinsäure, Dodecandicarbonsäure, Maleinsäure, Fumarsäure, Dimerfettsäure, Phthalsäure, Phthalsäureanhydrid, Isophthalsäure, Terephthalsäure, Dimethylterephthalat, Hexahydrophthalsäure, Trimellithsäure und Trimellithsäureanhydrid, oder Mischungen der vorgenannten Säuren, sowie Polyesterpolyole aus Lactonen wie beispielsweise aus ε-Caprolacton und Startern wie den vorgenannten zwei- oder dreiwertigen Alkoholen.
   Besonders geeignete Polyesterpolyole sind Polyesterdiole.
- Polycarbonatpolyole, wie sie durch Umsetzung beispielsweise der oben genannten - zum Aufbau der Polyesterpolyole eingesetzten - Alkohole mit Dialkylcarbonaten, Diarylcarbonaten oder Phosgen zugänglich sind.
- Mindestens zwei Hydroxylgruppen tragende Blockcopolymere, welche mindestens zwei verschiedene Blöcke mit Polyether-, Polyester- und/oder Polycarbonatstruktur der oben beschriebenen Art aufweisen, insbesondere Polyetherpolyesterpolyole.
- Polyacrylat- und Polymethacrylatpolyole.
- Polyhydroxyfunktionelle Fette und Öle, beispielsweise natürliche Fette und Öle, inbesondere Ricinusöl; oder durch chemische Modifizierung von natürlichen Fetten und Ölen gewonnene - sogenannte oleochemische - Polyole, beispielsweise die durch Epoxidierung ungesättigter Öle und anschliessender Ringöffnung mit Carbonsäuren bzw. Alkoholen erhaltenen Epoxypolyester bzw. Epoxypolyether, oder durch Hydroformylierung und Hydrierung ungesättigter Öle erhaltene Polyole; oder aus natürlichen Fetten und Ölen durch Abbauprozesse wie Alkoholyse oder Ozonolyse und anschliessender chemischer Verknüpfung, beispielsweise durch Umesterung oder Dimerisierung, der so gewonnenen Abbauprodukte oder Derivaten davon erhaltene Polyole. Geeignete Abbauprodukte von natürlichen Fetten und Ölen sind insbesondere Fettsäuren und Fettalkohole sowie Fettsäureester, insbesondere die Methylester (FAME), welche beispielsweise durch Hydroformylierung und Hydrierung zu Hydroxyfettsäureestern derivatisiert werden können.
- Polykohlenwasserstoffpolyole, auch Oligohydrocarbonole genannt, wie beispielsweise polyhydroxyfunktionelle Polyolefine, Polyisobutylene, Polyisoprene; polyhydroxyfunktionelle Ethylen-Propylen-, Ethylen-Butylen- oder Ethylen-Propylen-Dien-Copolymere, wie sie beispielsweise von der Firma Kraton Polymers hergestellt werden; polyhydroxyfunktionelle Polymere von Dienen, insbesondere von 1,3-Butadien, welche insbesondere auch aus anionischer Polymerisation hergestellt sein können; polyhydroxyfunktionelle Copolymere aus Dienen wie 1,3-Butadien oder Diengemischen und Vinylmonomeren wie Styrol, Acrylonitril, Vinylchlorid, Vinylacetat, Vinylalkohol, Isobutylen und Isopren, beispielsweise polyhydroxyfunktionelle Acrylonitril/ Butadien-Copolymere, wie sie beispielsweise aus Epoxiden oder Aminoalkoholen und carboxylterminierten Acrylonitril/Butadien-Copolymeren (beispielsweise kommerziell erhältlich unter dem Namen Hypro^{®} (früher Hycar^{®}) CTBN und CTBNX und ETBN von Nanoresins AG, Deutschland, bzw. Emerald Performance Materials LLC) hergestellt werden können; sowie hydrierte polyhydroxyfunktionelle Polymere oder Copolymere von Dienen.

Als Polyol bevorzugt sind Polyoxyalkylenpolyole, Polyesterpolyole, Polycarbonatpolyole und Polyacrylatpolyole. Besonders bevorzugt sind Polyoxyalkylenpolyole.
Bevorzugte Polyoxyalkylenpolyole sind Polyoxypropylenpolyole und Polyoxyethylen-polyoxypropylen-Mischpolyole.
Das Polyol weist bevorzugt ein Molekulargewicht von 1'000 bis 20'000 g/mol, besonders bevorzugt von 2'000 bis 20'000 g/mol auf.
Das Polyol ist bevorzugt ein Diol.

Zusätzlich zu diesen genannten Polyolen können kleine Mengen von niedrigmolekularen zwei- oder mehrwertigen Alkoholen wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, hydriertes Bisphenol A, dimere Fettalkohole, 1,1,1-Trimethylolethan, 1,1,1-Trimethylolpropan, Glycerin, Pentaerythrit, Zuckeralkohole wie Xylit, Sorbit oder Mannit, Zucker wie Saccharose, andere höherwertige Alkohole, niedrigmolekulare Alkoxylierungsprodukte der vorgenannten zwei- und mehrwertigen Alkohole, sowie Mischungen der vorgenannten Alkohole bei der Herstellung des Isocyanatgruppen-haltigen Polyurethanpolymers mitverwendet werden.

Als Polyisocyanat für die Herstellung eines Isocyanatgruppen-haltigen Polyurethanpolymers geeignet sind insbesondere die folgenden handelsüblichen Polyisocyanate oder beliebige Mischungen davon:
Aliphatische Isocyanate wie insbesondere 1,4-Tetramethylendiisocyanat, 2-Methylpentamethylen-1,5-diisocyanat, 1,6-Hexamethylendiisocyanat (HDI), 2,2,4- und 2,4,4-Trimethyl-1,6-hexamethylendiisocyanat (TMDI), 1,10-Decamethylendiisocyanat, 1,12-Dodecamethylendiisocyanat, Lysin- und Lysinesterdiisocyanat, Cyclohexan-1,3- und -1,4-diisocyanat, 1-Methyl-2,4- und -2,6-diisocyanatocyclohexan und beliebige Gemische dieser Isomeren (HTDI oder H₆TDI), 1-Isocyanato-3,3,5-trimethyl-5-isocyanatomethyl-cyclohexan (=Isophorondiisocyanat oder IPDI), Perhydro-2,4'- und -4,4'-diphenylmethandiisocyanat (HMDI oder H₁₂MDI), 1,4-Diisocyanato-2,2,6-trimethylcyclohexan (TMCDI), 1,3- und 1,4-Bis-(isocyanatomethyl)cyclohexan, m- und p-Xylylendiisocyanat (m- und p-XDI), Tetramethyl-1,3- und -1,4-xylylendiisocyanat (m- und p-TMXDI), Bis-(1-Isocyanato-1-methylethyl)naphthalin, Dimer- und Trimerfettsäureisocyanate wie 3,6-Bis-(9-isocyanatononyl)-4,5-di-(1-heptenyl)cyclohexen (Dimeryldiisocyanat) und α,α,α',α',α",α"-Hexamethyl-1,3,5-mesitylentriisocyanat, sowie weiterhin aromatische Isocyanate wie insbesondere 2,4- und 2,6-Toluylendiisocyanat und beliebige Gemische dieser Isomeren (TDI), 4,4'-, 2,4'- und 2,2'-Diphenylmethandiisocyanat und beliebige Gemische dieser Isomeren (MDI), Gemische aus MDI und MDI-Homologen (polymeres MDI oder PMDI), 1,3- und 1,4-Phenylendiisocyanat, 2,3,5,6-Tetramethyl-1,4-diisocyanatobenzol, Naphthalin-1,5-diisocyanat (NDI), 3,3'-Dimethyl-4,4'-diisocyanatodiphenyl (TODI), Dianisidindiisocyanat (DADI), 1,3,5-Tris-(isocyanatomethyl)benzol, Tris-(4-isocyanatophenyl)methan und Tris-(4-isocyanatophenyl)thiophosphat, sowie Oligomere und Polymere der vorgenannten Isocyanate, sowie beliebige Mischungen der vorgenannten Isocyanate.
Bevorzugte Polyisocyanate sind Diisocyanate. Besonders bevorzugt sind IPDI, HDI, MDI und TDI, insbesondere IPDI. Auf der Basis von IPDI sind Polymere mit Endgruppen der Formel (I) erhältlich, welche eine niedrige Viskosität aufweisen und gute mechanische Eigenschaften und eine geringe Vergilbungsneigung ermöglichen.

Eine weitere Möglichkeit zur Herstellung eines Polymers mit Endgruppen der Formel (I) ist die Umsetzung mindestens eines Hydroxysilans der Formel (II) mit mindestens einem Diisocyanat R⁶-(NCO)₂ zu einem Isocyanatosilan der Formel (III) und nachfolgender Umsetzung dieses Isocyanatosilans mit mindestens einem Polyol. 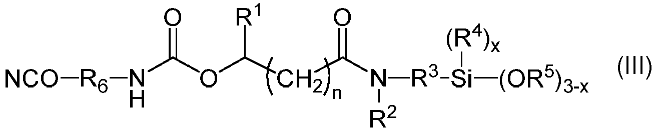 In der Formel (III) steht R⁶ für einen zweiwertigen Kohlenwasserstoffrest mit 4 bis 16 C-Atom und R¹, R², R³, R⁴, R⁵, n und x weisen die bereits genannten Bedeutungen auf.
Bevorzugt steht R⁶ für 1,6-Hexylen, 2,2,4- und 2,4,4-Trimethyl-1,6-hexylen, 1,3- und 1,4-Cyclohexylen, 1,3- und 1,4-Xylylen, 1,3- und 1,4-Tetramethylxylylen, 4,4'- und 2,4'-substituiertes Diphenylmethan, 2,4- und 2,6-substituiertes Toluol und IPDI nach Entfernung der zwei Isocyanatgruppen, insbesondere für IPDI nach Entfernung der zwei Isocyanatgruppen. Diese Isocyanatosilane stellen gut zugängliche, lagerstabile Substanzen dar.
Die OH-Gruppen des Polyols werden bevorzugt ungefähr stöchiometrisch bezogen auf die Isocyanatgruppen des Isocyanatosilans der Formel (III) eingesetzt.
Als Polyol geeignet sind insbesondere die bereits zur Herstellung eines Isocyanatgruppen-haltigen Polyurethanpolymers genannten Polyole.

Bevorzugt sind Polyoxyalkylenpolyole, Polyesterpolyole, Polycarbonatpolyole und Polyacrylatpolyole. Besonders bevorzugt sind Polyoxyalkylenpolyole. Bevorzugte Polyoxyalkylenpolyole sind Polyoxypropylenpolyole und Polyoxyethylen-polyoxypropylen-Mischpolyole.
Bevorzugt weist das Polyol ein Molekulargewicht von 2'000 bis 20'000 g/mol auf.
Bevorzugt ist das Polyol ein Diol.

Ein weiterer Gegenstand der vorliegenden Erfindung ist ein Isocyanatosilan der Formel (III a), welches ein Umsetzungsprodukt von mindestens einem Hydroxysilan der Formel (II a) mit mindestens einem Diisocyanat R⁶-(NCO)₂ darstellt. 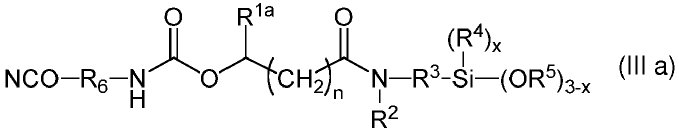 In der Formel (III a) weisen R^{1a}, R², R³, R⁴, R⁵, R⁶, n und x die bereits genannten Bedeutungen auf.
Als Diisocyanat R⁶-(NCO)₂ geeignet sind die bereits zur Herstellung eines Isocyanatgruppen-haltigen Polyurethanpolymers erwähnten Diisocyanate. Insbesondere geeignet sind 1,6-Hexamethylendiisocyanat, 2,2,4- und 2,4,4-Trimethyl-1,6-hexamethylendiisocyanat, Cyclohexan-1,3- und -1,4-diisocyanat, 1-Isocyanato-3,3,5-trimethyl-5-isocyanatomethyl-cyclohexan, m- und p-Xylylendiisocyanat, Tetramethyl-1,3- und -1,4-xylylendiisocyanat, 4,4'- und 2,4'-Diphenylmethandiisocyanat und 2,4- und 2,6-Toluylendiisocyanat.
Davon bevorzugt sind 1,6-Hexamethylendiisocyanat, 1-Isocyanato-3,3,5-trimethyl-5-isocyanatomethyl-cyclohexan, 4,4'- und 2,4'-Diphenylmethandiisocyanat und 2,4- und 2,6-Toluylendiisocyanat.
Besonders bevorzugt ist 1-Isocyanato-3,3,5-trimethyl-5-isocyanatomethylcyclohexan.

Besonders bevorzugte Isocyanatosilane der Formel (IIIa) sind ausgewählt aus der Gruppe bestehend aus 1-Oxo-1-((3-(trimethoxysilyl)propyl)amino)-4-octyl ((5-isocyanato-1,3,3-trimethylcyclohexyl)methyl)carbamat; 1-Oxo-1-((3-(triethoxysilyl)propyl)amino)-4-octyl ((5-isocyanato-1,3,3-trimethylcyclohexyl)methyl)-carbamat; 1-Oxo-1-((2,2-dimethyl-4-(trimethoxysilyl)butyl)amino)-4-octyl ((5-isocyanato-1,3,3-trimethylcyclohexyl)methyl)carbamat; 1-Oxo-1-((2,2-dimethyl-4-(triethoxysilyl)butyl)amino)-4-octyl ((5-isocyanato-1,3,3-trimethylcyclohexyl)-methyl)carbamat; 1-Oxo-1-((3-(trimethoxysilyl)propyl)amino)-4-nonyl ((5-isocyanato-1,3,3-trimethylcyclohexyl)methyl)carbamat; 1-Oxo-1-((3-(triethoxysilyl)propyl)amino)-4-nonyl ((5-isocyanato-1,3,3-trimethylcyclohexyl)methyl)-carbamat; 1-Oxo-1-((2,2-dimethyl-4-(trimethoxysilyl)butyl)amino)-4-nonyl ((5-isocyanato-1,3,3-trimethylcyclohexyl)methyl)carbamat; 1-Oxo-1-((2,2-dimethyl-4-(triethoxysilyl)butyl)amino)-4-nonyl ((5-isocyanato-1,3,3-trimethylcyclohexyl)-methyl)carbamat; 1-Oxo-1-((3-(trimethoxysilyl)propyl)amino)-4-decyl ((5-isocyanato-1,3,3-trimethylcyclohexyl)methyl)carbamat; 1-Oxo-1-((3-(triethoxysilyl)propyl)amino)-4-decyl ((5-isocyanato-1,3,3-trimethylcyclohexyl)methyl)-carbamat; 1-Oxo-1-((2,2-dimethyl-4-(trimethoxysilyl)butyl)amino)-4-decyl ((5-isocyanato-1,3,3-trimethylcyclohexyl)methyl)carbamat; 1-Oxo-1-((2,2-dimethyl-4-(triethoxysilyl)butyl)amino)-4-decyl ((5-isocyanato-1,3,3-trimethylcyclohexyl)-methyl)carbamat; 1-Oxo-1-((3-(trimethoxysilyl)propyl)amino)-4-undecyl ((5-isocyanato-1,3,3-trimethylcyclohexyl)methyl)carbamat; 1-Oxo-1-((3-(triethoxysilyl)propyl)amino)-4-undecyl ((5-isocyanato-1,3,3-trimethylcyclohexyl)methyl)-carbamat; 1-Oxo-1-((2,2-dimethyl-4-(trimethoxysilyl)butyl)amino)-4-undecyl ((5-isocyanato-1,3,3-trimethylcyclohexyl)methyl)carbamat; 1-Oxo-1-((2,2-dimethyl-4-(triethoxysilyl)butyl)amino)-4-undecyl ((5-isocyanato-1,3,3-trimethylcyclohexyl)methyl)carbamat; 1-Oxo-1-((3-(trimethoxysilyl)propyl)amino)-4-dodecyl ((5-isocyanato-1,3,3-trimethylcyclohexyl)methyl)carbamat; 1-Oxo-1-((3-(triethoxysilyl)propyl)amino)-4-dodecyl ((5-isocyanato-1,3,3-trimethylcyclohexyl)-methyl)carbamat; 1-Oxo-1-((2,2-dimethyl-4-(trimethoxysilyl)butyl)amino)-4-dodecyl ((5-isocyanato-1,3,3-trimethylcyclohexyl)methyl)carbamat; 1-Oxo-1-((2,2-dimethyl-4-(triethoxysilyl)butyl)amino)-4-dodecyl ((5-isocyanato-1,3,3-trimethylcyclohexyl)methyl)carbamat; 1-Oxo-1-((3-(trimethoxysilyl)propyl)amino)-5-nonyl ((5-isocyanato-1,3,3-trimethylcyclohexyl)methyl)carbamat; 1-Oxo-1-((3-(triethoxysilyl)propyl)amino)-5-nonyl ((5-isocyanato-1,3,3-trimethylcyclohexyl)-methyl)carbamat; 1-Oxo-1-((2,2-dimethyl-4-(trimethoxysilyl)butyl)amino)-5-nonyl ((5-isocyanato-1,3,3-trimethylcyclohexyl)methyl)carbamat; 1-Oxo-1-((2,2-dimethyl-4-(triethoxysilyl)butyl)amino)-5-nonyl ((5-isocyanato-1,3,3-trimethylcyclohexyl)methyl)carbamat; 1-Oxo-1-((3-(trimethoxysilyl)propyl)amino)-5-decyl ((5-isocyanato-1,3,3-trimethylcyclohexyl)methyl)carbamat; 1-Oxo-1-((3-(triethoxysilyl)propyl)amino)-5-decyl ((5-isocyanato-1,3,3-trimethylcyclohexyl)methyl)-carbamat; 1-Oxo-1-((2,2-dimethyl-4-(trimethoxysilyl)butyl)amino)-5-decyl ((5-isocyanato-1,3,3-trimethylcyclohexyl)methyl)carbamat; 1-Oxo-1-((2,2-dimethyl-4-(triethoxysilyl)butyl)amino)-5-decyl ((5-isocyanato-1,3,3-trimethylcyclohexyl)-methyl)carbamat; 1-Oxo-1-((3-(trimethoxysilyl)propyl)amino)-5-undecyl ((5-isocyanato-1,3,3-trimethylcyclohexyl)methyl)carbamat; 1-Oxo-1-((3-(triethoxysilyl)-propyl)amino)-5-undecyl ((5-isocyanato-1,3,3-trimethylcyclohexyl)methyl)-carbamat; 1-Oxo-1-((2,2-dimethyl-4-(trimethoxysilyl)butyl)amino)-5-undecyl ((5-isocyanato-1,3,3-trimethylcyclohexyl)methyl)carbamat; 1-Oxo-1-((2,2-dimethyl-4-(triethoxysilyl)butyl)amino)-5-undecyl ((5-isocyanato-1,3,3-trimethylcyclohexyl)methyl)carbamat; 1-Oxo-1-((3-(trimethoxysilyl)propyl)amino)-5-dodecyl ((5-isocyanato-1,3,3-trimethylcyclohexyl)methyl)carbamat; 1-Oxo-1-((3-(triethoxysilyl)propyl)amino)-5-dodecyl ((5-isocyanato-1,3,3-trimethylcyclohexyl)-methyl)carbamat; 1-Oxo-1-((2,2-dimethyl-4-(trimethoxysilyl)butyl)amino)-5-dodecyl ((5-isocyanato-1,3,3-trimethylcyclohexyl)methyl)carbamat; 1-Oxo-1-((2,2-dimethyl-4-(triethoxysilyl)butyl)amino)-5-dodecyl ((5-isocyanato-1,3,3-trimethylcyclohexyl)methyl)carbamat; 1-Oxo-1-((3-(trimethoxysilyl)propyl)amino)-6-decyl ((5-isocyanato-1,3,3-trimethylcyclohexyl)methyl)carbamat; 1-Oxo-1-((3-(triethoxysilyl)propyl)amino)-6-decyl ((5-isocyanato-1,3,3-trimethylcyclohexyl)-methyl)carbamat; 1-Oxo-1-((2,2-dimethyl-4-(trimethoxysilyl)butyl)amino)-6-decyl ((5-isocyanato-1,3,3-trimethylcyclohexyl)methyl)carbamat; 1-Oxo-1-((2,2-dimethyl-4-(triethoxysilyl)butyl)amino)-6-decyl ((5-isocyanato-1,3,3-trimethylcyclohexyl)methyl)carbamat; 1-Oxo-1-((3-(trimethoxysilyl)propyl)amino)-6-undecyl ((5-isocyanato-1,3,3-trimethylcyclohexyl)methyl)carbamat; 1-Oxo-1-((3-(triethoxysilyl)propyl)amino)-6-undecyl ((5-isocyanato-1,3,3-trimethylcyclohexyl)methyl)carbamat; 1-Oxo-1-((2,2-dimethyl-4-(trimethoxysilyl)butyl)-amino)-6-undecyl ((5-isocyanato-1,3,3-trimethylcyclohexyl)methyl)carbamat; 1-Oxo-1-((2,2-dimethyl-4-(triethoxysilyl)butyl)amino)-6-undecyl ((5-isocyanato-1,3,3-trimethylcyclohexyl)methyl)carbamat; 1-Oxo-1-((3-(trimethoxysilyl)propyl)amino)-6-dodecyl ((5-isocyanato-1,3,3-trimethylcyclohexyl)methyl)carbamat; 1-Oxo-1-((3-(triethoxysilyl)propyl)amino)-6-dodecyl ((5-isocyanato-1,3,3-trimethylcyclohexyl)methyl)carbamat; 1-Oxo-1-((2,2-dimethyl-4-(trimethoxysilyl)butyl)amino)-6-dodecyl ((5-isocyanato-1,3,3-trimethylcyclohexyl)methyl)carbamat und 1-Oxo-1-((2,2-dimethyl-4-(triethoxysilyl)butyl)amino)-6-dodecyl ((5-isocyanato-1,3,3-trimethylcyclohexyl)methyl)carbamat.
Besonders bevorzugt sind die Silylpropylverbindungen. Diese Isocyanatosilane sind besonders gut zugänglich.
Besonders bevorzugt sind weiterhin die in 4- und in 5-Stellung am Carbamat-Sauerstoff substituierten Verbindungen, insbesondere die in 4-Stellung substituierten. Diese Isocyanatosilane sind besonders gut zugänglich. Besonders bevorzugt sind weiterhin die Triethoxysilyl-Verbindungen. Diese Isocyanatosilane sind besonders lagerstabil und setzen kein Methanol frei.

Ein Hydroxysilan der Formel (II) kann vorteilhaft durch Umsetzung mindestens eines Lactons der Formel (IV) mit mindestens einem Aminosilan der Formel (V) hergestellt werden.

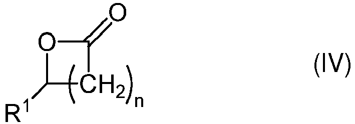

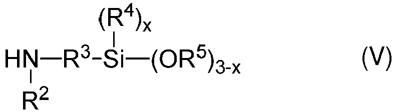

In den Formeln (IV) und (V) weisen R¹, R², R³, R⁴, R⁵, n und x die bereits genannten Bedeutungen auf.
Diese Umsetzung wird bevorzugt bei Temperaturen im Bereich von 50 °C bis 150 °C, insbesondere 60 °C bis 140 °C, durchgeführt. Bei der Umsetzung kann ein Katalysator eingesetzt werden, insbesondere eine Säure, bevorzugt eine Carbonsäure. Das Aminosilan der Formel (V) wird bevorzugt ungefähr stöchiometrisch zum Lacton der Formel (IV) eingesetzt. Insbesondere wird die Umsetzung mit einem Aminosilan/Lacton-Verhältnis von 0.8 bis 1.1 durchgeführt. Die Umsetzung kann lösemittelfrei oder in einem geeigneten Lösemittel erfolgen. Bevorzugt werden nach der Umsetzung allfällig vorhandene flüchtige Verbindungen, insbesondere ein gegebenenfalls vorhandenes Lösemittel, unreagierte Edukte oder freigesetztes Methanol oder Ethanol, destillativ aus dem Reaktionsprodukt entfernt.
Die spezielle Struktur des Lactons der Formel (IV) hat einen grossen Einfluss auf den Verlauf der Umsetzung. Ausgehend von den Lactonen der Formel (IV) wird in hoher Ausbeute das entsprechende Hydroxysilan der Formel (II) erhalten, insbesondere mit den bevorzugten Substituenten R^{1a} als R¹. Werden hingegen unsubstituierte Lactone wie γ-Butyrolacton, δ-Valerolacton oder ε-Caprolacton verwendet, werden Reaktionsprodukte erhalten, deren Gehalt an Hydroxysilan aufgrund von Selbstkondensationsreaktionen stark vermindert ist. Solche Reaktionsprodukte, welche neben anderen Selbstkondensationsprodukten typischerweise einen erhöhten Gehalt an cyclischen Silanverbindungen der Formel (VI) aufweisen, sind für die Herstellung von Silangruppen-haltigen Polymeren nicht gut geeignet.

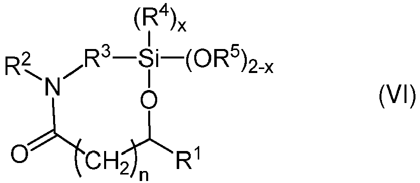

In der Formel (VI) weisen R¹, R², R³, R⁴, R⁵, n und x die bereits genannten Bedeutungen auf.

Geeignete Lactone der Formel (IV) sind insbesondere γ-Valerolacton, γ-Hexalacton, γ-Heptalacton, γ-Octalacton, γ-Nonalacton, γ-Decalacton, γ-Undecalacton, γ-Dodecalacton, δ-Hexalacton δ-Heptalacton, δ-Octalacton, δ-Nonalacton, δ-Decalacton, δ-Undecalacton, δ-Dodecalacton, ε-Heptalacton, ε-Octalacton, ε-Nonalacton, ε-Decalacton, ε-Undecalacton und ε-Dodecalacton.
Davon bevorzugt sind γ-Octalacton, γ-Nonalacton, γ-Decalacton, γ-Undecalacton, γ-Dodecalacton, δ-Nonalacton, δ-Decalacton, δ-Undecalacton, δ-Dodecalacton, ε-Decalacton, ε-Undecalacton und ε-Dodecalacton.
Davon besonders bevorzugt sind die γ- und die δ-Lactone, insbesondere die y-Lactone.
Bei diesen Lactonen handelt es sich um wenig toxische Verbindungen. Dies ist besonders vorteilhaft, insbesondere auch, weil durch das Vorhandensein von Lacton-Resten für die damit hergestellten Hydroxysilane bzw. Polymere mit Endgruppen der Formel (I) keine toxikologischen Probleme entstehen können.

Geeignete Aminosilane der Formel (V) sind insbesondere Aminosilane mit einer primären Aminogruppe, insbesondere 3-Aminopropyl-trimethoxysilan, 3-Aminopropyl-dimethoxymethylsilan, 3-Amino-2-methylpropyl-trimethoxysilan, 4-Aminobutyl-trimethoxysilan, 4-Aminobutyl-dimethoxymethylsilan, 4-Amino-3-methylbutyl-trimethoxysilan, 4-Amino-3,3-dimethylbutyl-trimethoxysilan, 4-Amino-3,3-dimethylbutyl-dimethoxymethylsilan, 2-Aminoethyl-trimethoxysilan, 2-Aminoethyl-dimethoxymethylsilan, Aminomethyl-trimethoxysilan, Aminomethyldimethoxymethylsilan, Aminomethylmethoxydimethylsilan, 7-Amino-4-oxaheptyl-dimethoxymethylsilan, sowie deren Analoga mit Ethoxy- anstelle der Methoxygruppen am Silicium.
Davon bevorzugt sind 3-Aminopropyl-trimethoxysilan, 3-Aminopropyl-triethoxysilan, 3-Amino-2-methylpropyl-trimethoxysilan, 3-Amino-2-methylpropyl-triethoxysilan, 4-Aminobutyl-trimethoxysilan, 4-Aminobutyl-triethoxysilan, 4-Amino-3-methylbutyl-trimethoxysilan, 4-Amino-3-methylbutyl-triethoxysilan, 4-Amino-3,3-dimethylbutyl-trimethoxysilan, 4-Amino-3,3-dimethylbutyl-triethoxysilan, 2-Aminoethyl-trimethoxysilan und 2-Aminoethyl-triethoxysilan.
Besonders bevorzugt sind 3-Aminopropyl-trimethoxysilan, 3-Aminopropyl-triethoxysilan, 4-Amino-3,3-dimethylbutyl-trimethoxysilan und 4-Amino-3,3-dimethylbutyl-triethoxysilan.

Das Polymer mit Endgruppen der Formel (I) ist unter Ausschluss von Feuchtigkeit gut lagerstabil. Bei Kontakt mit Feuchtigkeit hydrolysieren die Endgruppen der Formel (I), worauf das Polymer zu einem vernetzten Kunststoff aushärtet.

Somit betrifft die vorliegende Erfindung auch einen vernetzten Kunststoff, welcher durch die Reaktion mindestens eines Polymers mit Endgruppen der Formel (I) mit Feuchtigkeit erhalten wird.

Das Polymer mit Endgruppen der Formel (I) weist vorteilhafte Eigenschaften auf. Seine Viskosität ist vergleichsweise niedrig, was für seine weitere Verarbeitung, beispielsweise als feuchtigkeitshärtende Zusammensetzung, vorteilhaft ist; analoge Silangruppen-haltige Polymere ausgehend von Hydroxysilanen mit primärer statt sekundärer OH-Gruppe, beispielsweise Umsetzungsprodukte von γ-Butyrolacton mit Aminosilanen, weisen typischerweise höhere Viskositäten auf. Der Gehalt an niedermolekularen Silanen im Polymer mit Endgruppen der Formel (I) ist gering, da bei seiner Herstellung, beispielsweise aus einem Isocyanatgruppen-haltigen Polyurethan polymer und dem Hydroxysilan der Formel (II), nahe am stöchiometrischen Optimum gearbeitet werden kann; dies im Gegensatz zu analogen Silangruppen-haltigen Polymeren ausgehend von Hydroxysilanen mit primärer OH-Gruppe. Das Polymer mit Endgruppen der Formel (I) weist weiterhin eine ausgezeichnete Lagerstabilität auf und härtet mit Feuchtigkeit schnell zu einem elastischen Material mit guter Festigkeit, Dehnbarkeit und überraschend guter Wärmebeständigkeit aus. Bei einer sehr hohen Temperatur von 90 °C bleibt das ausgehärtete Polymer auch bei längerer Temperatureinwirkung elastisch, während viele Silangruppen-haltige Polymere aus dem Stand der Technik bereits nach wenigen Tagen jegliche Festigkeit verlieren oder gar zerfliessen.

Das Polymer mit Endgruppen der Formel (I) ist besonders geeignet als Bestandteil von härtbaren Massen, insbesondere zur Formulierung von silanfunktionellen feuchtigkeitshärtenden Zusammensetzungen.

Ein weiterer Gegenstand der vorliegenden Erfindung ist eine feuchtigkeitshärtende Zusammensetzung enthaltend mindestens ein Polymer mit Endgruppen der Formel (I) und mindestens einen weiteren Bestandteil.
Bevorzugt weist die feuchtigkeitshärtende Zusammensetzung einen Gehalt an Polymer mit Endgruppen der Formel (I) von 5 bis 90 Gew.-%, insbesondere 10 bis 60 Gew.-%, auf.
Als weitere Bestandteile sind insbesondere Katalysatoren, Vernetzer, Weichmacher, Füllstoffe, Pigmente, Lösemittel, Haftvermittler, Trocknungsmittel, Rheologiehilfsmittel und Stabilisatoren geeignet.

Bevorzugt enthält die feuchtigkeitshärtende Zusammensetzung mindestens einen Katalysator, der die Vernetzung von Silangruppen-haltigen Polymeren beschleunigt. Dafür geeignet sind insbesondere Metallkatalysatoren und/oder stickstoffhaltige Verbindungen.
Geeignete Metallkatalysatoren sind Verbindungen von Titan, Zirkonium, Aluminium und Zinn, insbesondere Organozinn-Verbindungen, Organotitanate, Organozirkonate und Organoaluminate, wobei diese Metallkatalysatoren insbesondere Alkoxygruppen, Sulfonatgruppen, Carboxylgruppen, Dialkylphosphatgruppen, Dialkylpyrophosphatgruppen und -Diketonatgruppen aufweisen. Besonders geeignete Organozinn-Verbindungen sind Dialkylzinnoxide, Dialkylzinndichloride, Dialkylzinndicarboxylate und Dialkylzinndiketonate, insbesondere Dibutylzinnoxid, Dibutylzinndichlorid, Dibutylzinndiacetat, Dibutylzinndilaurat, Dibutylzinndiacetylacetonat, Dioctylzinnoxid, Dioctylzinndichlorid, Dioctylzinndiacetat, Dioctylzinndilaurat und Dioctylzinndiacetylacetonat, sowie Alkylzinnthioester.
Besonders geeignete Organotitanate sind die Folgenden:
- Titan(IV)-Komplexverbindungen mit zwei 1,3-Diketonat-Liganden, insbesondere 2,4-Pentandionat (=Acetylacetonat), und zwei Alkoholat-Liganden;
- Titan(IV)-Komplexverbindungen mit zwei 1,3-Ketoesterat-Liganden, insbesondere Ethylacetoacetat, und zwei Alkoholat-Liganden;
- Titan(IV)-Komplexverbindungen mit einem oder mehreren Aminoalkoholat-Liganden, insbesondere Triethanolamin oder 2-((2-Aminoethyl)amino)ethanol, und einem oder mehreren Alkoholat-Liganden;
- Titan(IV)-Komplexverbindungen mit vier Alkoholat-Liganden;
- sowie höherkondensierte Organotitanate, insbesondere oligomeres Titan(IV)-tetrabutanolat, auch als Polybutyltitanat bezeichnet;
wobei als Alkoholat-Liganden insbesondere Isobutoxy, n-Butoxy, Isopropoxy, Ethoxy und 2-Ethylhexoxy geeignet sind.

Ganz besonders geeignet sind Bis(Ethylacetoacetato)-diisobutoxy-titan(IV), Bis(Ethylacetoacetato)-diisopropoxy-titan(IV), Bis(Acetylacetonato)-diisopropoxy-titan(IV), Bis(Acetylacetonato)-diisobutoxy-titan(IV), Tris(oxyethyl)aminisopropoxy-titan(IV), Bis[tris(oxyethyl)amin]-diisopropoxy-titan(IV), Bis(2-Ethylhexan-1,3-dioxy)-titan(IV), Tris[2-((2-Aminoethyl)amino)ethoxy]-ethoxytitan(IV), Bis(Neopentyl(diallyl)oxy-diethoxy-titan(IV), Titan(IV)-tetrabutanolat, Tetra-(2-ethylhexyloxy)titanat, Tetra-(isopropoxy)titanat und Polybutyltitanat. Insbesondere geeignet sind die kommerziell erhältlichen Typen Tyzor^{®} AA, GBA, GBO, AA-75, AA-65, AA-105, DC, BEAT, BTP, TE, TnBT, KTM, TOT, TPT oder IBAY (alle von Du Pont / Dorf Ketal); Tytan PBT, TET, X85, TAA, ET, S2, S4 oder S6 (alle von TensoChema) und Ken-React^{®} KR^{®} TTS, 7, 9QS, 12, 26S, 33DS, 38S, 39DS, 44, 134S, 138S, 133DS, 158FS oder LICA^{®} 44 (alle von Kenrich Petrochemicals).
Besonders geeignete Organozirkonate sind die kommerziell erhältlichen Typen Ken-React^{®} NZ^{®} 38J, KZ^{®} TPPJ, KZ^{®} TPP, NZ^{®} 01, 09, 12 38, 44 oder 97 (alle von Kenrich Petrochemicals) und Snapcure^{®} 3020, 3030, 1020 (alle von Johnson Matthey & Brandenberger).
Ein besonders geeignetes Organoaluminat ist der kommerziell erhältliche Typ K-Kat 5218 (von King Industries).

Als Katalysator geeignete stickstoffhaltige Verbindungen sind insbesondere Amine wie insbesondere N-Ethyl-diisopropylamin, N,N,N',N'-Tetramethyl-alkylendiamine, Polyoxyalkylenamine, 1,4-Diazabicyclo[2.2.2]octan; Aminosilane wie insbesondere 3-Aminopropyl-trimethoxysilan, 3-Aminopropyl-dimethoxymethylsilan, N-(2-Aminoethyl)-3-aminopropyl-trimethoxysilan, N-(2-Aminoethyl)-3-aminopropyl-methyldimethoxysilan, N-(2-Aminoethyl)-N'-[3-(trimethoxysilyl)propyl]ethylendiamin sowie deren Analoga mit Ethoxy- oder Isopropoxyanstelle der Methoxygruppen am Silicium; Amidine wie insbesondere 1,8-Diazabicyclo[5.4.0]undec-7-en (DBU), 1,5-Diazabicyclo[4.3.0]non-5-en (DBN), 6-Dibutylamino-1,8-diazabicyclo[5.4.0]undec-7-en; Guanidine wie insbesondere Tetramethylguanidin, 2-Guanidinobenzimidazol, Acetylacetoneguanidin, 1,3-Dio-tolylguanidin, 2-tert.Butyl-1,1,3,3-tetramethylguanidin; und Imidazole wie insbesondere N-(3-Trimethoxysilylpropyl)-4,5-dihydroimidazol und N-(3-Triethoxysilylpropyl)-4,5-dihydroimidazol.
Insbesondere geeignet sind auch Kombinationen verschiedener Katalysatoren, insbesondere Kombinationen aus mindestens einem Metallkatalysator und mindestens einer stickstoffhaltigen Verbindung.

Als Katalysator bevorzugt sind Organozinn-Verbindungen, Organotitanate, Amine, Amidine, Guanidine und Imidazole. Besonders bevorzugt sind Organotitanate und Amidine.

Weitere geeignete Bestandteile der feuchtigkeithärtenden Zusammensetzung sind insbesondere die folgenden Hilfs- und Zusatzmittel:
- Haftvermittler und/oder Vernetzer, insbesondere Silane wie die bereits als Katalysator erwähnten Aminosilane, Aminosilane mit sekundären Aminogruppen, wie insbesondere N-Phenyl-, N-Cyclohexyl- und N-Alkylaminosilane, weiterhin Mercaptosilane, Epoxysilane, (Meth)acrylosilane, Anhydridosilane, Carbamatosilane, Alkylsilane und Iminosilane, sowie oligomere Formen dieser Silane, sowie Addukte aus primären Aminosilanen mit Epoxysilanen oder (Meth)acrylosilanen oder Anhydridosilanen. Insbesondere geeignet sind 3-Glycidoxypropyltrimethoxysilan, 3-Aminopropyltrimethoxysilan, N-(2-Aminoethyl)-3-aminopropyl-trimethoxysilan, N-(2-Aminoethyl)-N'-[3-(trimethoxysilyl)propyl]ethylendiamin, 3-Mercaptopropyltrimethoxysilan, 3-Ureidopropyltrimethoxysilan und die entsprechenden Silane mit Ethoxygruppen anstelle der Methoxygruppen, sowie oligomere Formen dieser Silane;
- Weichmacher, insbesondere Carbonsäureester wie Phthalate, insbesondere Dioctylphthalat, Diisononylphthalat oder Diisodecylphthalat, Adipate, insbesondere Dioctyladipat, Azelate, Sebacate, Polyole, insbesondere Polyoxyalkylenpolyole oder Polyesterpolyole, Glykolether, Glykolester, organische Phosphor- und Sulfonsäureester oder Polybutene;
- Lösemittel;
- anorganische und organische Füllstoffe, insbesondere natürliche, gemahlene oder gefällte Calciumcarbonate, welche gegebenenfalls mit Fettsäuren, insbesondere Stearinsäure, beschichtet sind, Baryt (Schwerspat), Talke, Quarzmehle, Quarzsand, Dolomite, Wollastonite, Kaoline, calcinierte Kaoline, Mica (Kalium-Aluminium-Silikat), Molekularsiebe, Aluminiumoxide, Aluminiumhydroxide, Magnesiumhydroxid, Kieselsäuren inklusive hochdisperse Kieselsäuren aus Pyrolyseprozessen, industriell hergestellte Russe, Graphit, Metall-Pulver wie Aluminium, Kupfer, Eisen, Silber oder Stahl, PVC-Pulver oder Hohlkugeln;
- Fasern, insbesondere Glasfasern, Kohlefasern, Metallfasern, Keramikfasern oder Kunststofffasern wie Polyamidfasern oder Polyethylenfasern;
- Farbstoffe;
- Pigmente, insbesondere Titandioxid oder Eisenoxide;
- Trocknungsmittel, insbesondere Tetraethoxysilan, Vinyltrimethoxy- oder Vinyltriethoxysilan und Organoalkoxysilane, welche in α-Stellung zur Silangruppe eine funktionelle Gruppe aufweisen, insbesondere N-(Methyldimethoxysilylmethyl)-O-methyl-carbamat, (Methacryloxymethyl)silane, Methoxymethylsilane, Orthoameisensäureester, sowie Calciumoxid oder Molekularsiebe;
- Rheologie-Modifizierer, insbesondere Verdickungsmittel, insbesondere Schichtsilikate wie Bentonite, Derivate von Rizinusöl, hydriertes Rizinusöl, Polyamide, Polyurethane, Harnstoffverbindungen, pyrogene Kieselsäuren, Celluloseether und hydrophob modifizierte Polyoxyethylene;
- Stabilisatoren gegen Oxidation, Wärme, Licht und UV-Strahlung;
- natürliche Harze, Fette oder Öle wie Kolophonium, Schellack, Leinöl, Rizinusöl und Sojaöl;
- nicht-reaktive Polymere, wie insbesondere Homo- oder Copolymere von ungesättigten Monomeren, insbesondere aus der Gruppe umfassend Ethylen, Propylen, Butylen, Isobutylen, Isopren, Vinylacetat und Alkyl(meth)acrylate, insbesondere Polyethylene (PE), Polypropylene (PP), Polyisobutylene, Ethylenvinylacetat-Copolymere (EVA) und ataktische Poly-α-Olefine (APAO);
- flammhemmende Substanzen, insbesondere die bereits genannten Füllstoffe Aluminiumhydroxid und Magnesiumhydroxid, sowie insbesondere organische Phosphorsäureester wie insbesondere Triethylphosphat, Trikresylphosphat, Triphenylphosphat, Diphenylkresylphosphat, Isodecyldiphenylphosphat, Tris(1,3-dichlor-2-propyl)phosphat, Tris(2-chlorethyl)phosphat, Tris(2-ethylhexyl)phosphat, Tris(chlorisopropyl)phosphat, Tris(chlorpropyl)-phosphat, isopropyliertes Triphenylphosphat, Mono-, Bis- und Tris(isopropylphenyl)phosphate unterschiedlichen Isopropylierungsgrades, Resorcinol-bis(diphenylphosphat), Bisphenol-A-bis(diphenylphosphat) und Ammoniumpolyphosphate;
- oberflächenaktive Substanzen, insbesondere Netzmittel, Verlaufsmittel, Entlüftungsmittel oder Entschäumer;
- Biozide, insbesondere Algizide, Fungizide oder das Pilzwachstum hemmende Substanzen;
sowie weitere üblicherweise in feuchtigkeitshärtenden Zusammensetzungen eingesetzte Substanzen.
Es kann sinnvoll sein, gewisse Bestandteile vor dem Einmischen in die feuchtigkeitshärtende Zusammensetzung chemisch oder physikalisch zu trocknen.

Die feuchtigkeitshärtende Zusammensetzung kann neben dem Polymer mit Endgruppen der Formel (I) weitere Silangruppen-haltige Oligo- oder Polymere enthalten.

Die feuchtigkeitshärtende Zusammensetzung ist in einer bevorzugten Ausführungsform frei von Organozinn-Verbindungen. Dies kann aus ökoligischen und/oder toxikoligischen Gründen vorteilhaft sein.
Die feuchtigkeitshärtende Zusammensetzung setzt bei ihrer Aushärtung in einer weiteren bevorzugten Ausführungsform kein Methanol frei. Dies kann aus ökoligischen und/oder toxikoligischen Gründen vorteilhaft sein.

Die feuchtigkeitshärtende Zusammensetzung wird vorzugsweise unter Ausschluss von Feuchtigkeit hergestellt und aufbewahrt. Typischerweise ist die Zusammensetzung lagerstabil, das heisst, sie kann unter Ausschluss von Feuchtigkeit in einer geeigneten Verpackung oder Anordung , wie insbesondere einem Fass, einem Beutel oder einer Kartusche, über einen Zeitraum von mehreren Monaten bis zu einem Jahr und länger aufbewahrt werden, ohne dass sie sich in ihren Anwendungseigenschaften oder in ihren Eigenschaften nach der Aushärtung in einem für ihrem Gebrauch relevanten Ausmass verändert. Üblicherweise wird die Lagerstabilität über die Messung der Viskosität oder der Auspresskraft ermittelt.

Die feuchtigkeitshärtende Zusammensetzung kann in Form einer einkomponentigen oder in Form einer zweikomponentigen Zusammensetzung vorliegen.

Als "einkomponentig" wird im vorliegenden Dokument eine härtbare Zusammensetzung bezeichnet, bei welcher alle Bestandteile der Zusammensetzung vermischt im gleichen Gebinde gelagert werden, und welche bei Raumtemperatur über einen Zeitraum von mehreren Wochen bis Monaten lagerstabil ist und mit Feuchtigkeit härtbar ist.
Als "zweikomponentig" wird im vorliegenden Dokument eine Zusammensetzung bezeichnet, bei welcher die Bestandteile der Zusammensetzung in zwei verschiedenen Komponenten vorliegen, welche in voneinander getrennten Gebinden gelagert werden und welche jeweils für sich bei Raumtemperatur lagerstabil sind. Erst kurz vor oder während der Applikation der Zusammensetzung werden die beiden Komponenten miteinander vermischt, worauf die vermischte Zusammensetzung aushärtet, wobei die Aushärtung erst durch die Einwirkung von Feuchtigkeit abläuft oder vervollständigt wird.

Bei der Applikation der feuchtigkeitshärtenden Zusammensetzung auf mindestens einen Festkörper oder Artikel kommen die vorhandenen Silangruppen in Kontakt mit Feuchtigkeit. Die Silangruppen haben die Eigenschaft, bei Kontakt mit Feuchtigkeit zu hydrolysieren. Dabei bilden sich Organosilanole und, durch nachfolgende Kondensationsreaktionen, Organosiloxane. Als Ergebnis dieser Reaktionen härtet die Zusammensetzung schliesslich aus. Dieser Vorgang wird auch als Vernetzung bezeichnet. Weiterhin können Silanolgruppen mit beispielsweise Hydroxylgruppen des Substrates, auf welches die Zusammensetzung appliziert ist, kondensieren, wodurch bei der Aushärtung eine ausgezeichnete Haftung der Zusammensetzung auf dem Substrat ausgebildet werden kann.
Das für die Aushärtung benötigte Wasser kann entweder aus der Luft stammen (Luftfeuchtigkeit), oder die Zusammensetzung kann mit einer Wasser enthaltenden Komponente in Kontakt gebracht werden, zum Beispiel durch Bestreichen, beispielsweise mit einem Abglättmittel, oder durch Besprühen, oder es kann der Zusammensetzung bei der Applikation eine Wasser enthaltende Komponente zugesetzt werden, zum Beispiel in Form einer wasserhaltigen Paste, die, beispielsweise über einen Statikmischer, eingemischt wird.

Die Aushärtung erfolgt je nach Temperatur, Art des Kontaktes, der Menge der Feuchtigkeit und der Anwesenheit allfälliger Katalysatoren unterschiedlich schnell. Bei einer Aushärtung mittels Luftfeuchtigkeit wird zunächst eine Haut an der Oberfläche der Zusammensetzung gebildet. Die sogenannte Hautbildungszeit stellt demnach ein Mass für die Aushärtungsgeschwindigkeit dar.

Ein weiterer Gegenstand der vorliegenden Erfindung betrifft somit eine ausgehärtete Zusammensetzung, erhalten aus der Aushärtung der feuchtigkeitshärtenden Zusammensetzung mit Feuchtigkeit.

Die Zusammensetzung verfügt im ausgehärteten Zustand über elastische Eigenschaften, insbesondere eine gute Festigkeit und hohe Dehnbarkeit, eine gute Wärmebeständigkeit und gute Haftungseigenschaften auf diversen Substraten. Dadurch eignet sie sich für eine Vielzahl von Verwendungen, insbesondere als Faserverbundwerkstoff (Composite), Vergussmasse, Dichtstoff, Klebstoff, Belag, Beschichtung oder Anstrich für Bau- und Industrieanwendungen, beispielsweise als Elektroisolationsmasse, Spachtelmasse, Fugendichtstoff, Montageklebstoff, Karrosserieklebstoff, Scheibenklebstoff, Sandwichelementklebstoff, Kaschierklebstoff, Laminatklebstoff, Verankerungsklebstoff, Bodenbelag und -beschichtung, Balkon- und Dachbeschichtung, Betonschutzbeschichtung, Parkhausbeschichtung sowie Schutzanstrich gegen Korrosion, als Versiegelung, Anstrich, Lack und Primer.
Besonders geeignet ist die feuchtigkeitshärtende Zusammensetzung als Klebstoff und/oder Dichtstoff, insbesondere für die Fugenabdichtung und für elastische Klebeverbindungen in Bau- und Industrieanwendungen.

Ein weiterer Gegenstand der vorliegenden Erfindung ist somit die Verwendung der feuchtigkeitshärtenden Zusammensetzung als elastischer Klebstoff und/oder elastischer Dichtstoff.

Für eine Anwendung der Zusammensetzung als Dichtstoff, beispielsweise für Fugen im Hoch oder Tiefbau, oder für eine Anwendung als Klebstoff für elastische Verklebungen, beispielsweise im Fahrzeugbau, weist die Zusammensetzung vorzugsweise eine pastöse Konsistenz mit strukturviskosen Eigenschaften auf. Ein solcher pastöser Dichtstoff oder Klebstoff wird mittels einer geeigneten Vorrichtung auf das Substrat aufgetragen. Geeignete Methoden zum Auftragen sind beispielsweise die Applikation aus handelsüblichen Kartuschen, welche manuell oder mittels Druckluft betrieben werden, oder aus einem Fass oder Hobbock mittels einer Förderpumpe oder eines Extruders, gegebenenfalls mittels eines Applikations-Roboters.
Ein Dichtstoff oder Klebstoff mit guten Applikationseigenschaften weist eine hohe Standfestigkeit und einen kurzen Fadenzug auf. Das heisst, er bleibt nach der Applikation in der applizierten Form stehen, fliesst also nicht auseinander, und zieht nach dem Absetzen des Applikationsgerätes keinen oder nur einen sehr kurzen Faden, so dass das Substrat nicht verschmutzt wird.
Ein Klebstoff für elastische Verklebungen, beispielsweise im Fahrzeugbau, wird bevorzugt in Form einer Raupe mit einer im Wesentlichen runden oder dreieckigen Querschnittsfläche aufgetragen.
In der Anwendung als Klebstoff wird die Zusammensetzung auf ein Substrat **S1** und/oder ein Substrat **S2** appliziert. Der Klebstoff kann somit auf das eine oder auf das andere Substrat oder auf beide Substrate appliziert werden. Danach werden die zu verklebenden Teile gefügt, worauf der Klebstoff durch Kontakt mit Feuchtigkeit aushärtet. Hierbei ist darauf zu achten, dass das Fügen der Teile innerhalb der so genannten Offenzeit erfolgt, um zu gewährleisten, dass beide Fügeteile verlässlich miteinander verklebt werden.
In der Anwendung als Dichtstoff wird die Zusammensetzung zwischen die Substrate **S1** und **S2** appliziert und anschliessend erfolgt die Aushärtung der Zusammensetzung durch Kontakt mit Feuchtigkeit. Üblicherweise wird der Dichtstoff in eine Fuge eingepresst.
In beiden Anwendungen kann das Substrat **S1** gleich oder verschieden von Substrat **S2** sein.
Geeignete Substrate **S1** oder **S2** sind insbesondere
- Glas, Glaskeramik, Beton, Mörtel, Backstein, Ziegel, Gips und Natursteine wie Granit oder Marmor;
- Metalle und Legierungen, wie Aluminium, Eisen, Stahl und Buntmetalle, sowie oberflächenveredelte Metalle und Legierungen, wie verzinkte oder verchromte Metalle;
- Leder, Textilien, Papier, Holz, mit Harzen, beispielsweise Phenol-, Melamin- oder Epoxidharzen, gebundene Holzwerkstoffe, Harz-Textil-Verbundwerkstoffe und weitere sogenannte Polymer-Composites;
- Kunststoffe, wie Polyvinylchlorid (Hart- und Weich-PVC), Acrylonitril-Butadien-Styrol-Copolymere (ABS), Polycarbonat (PC), Polyamid (PA), Polyester, Poly(methylmethacrylat) (PMMA), Polyester, Epoxidharze, Polyurethane (PUR), Polyoxymethylen (POM), Polyolefine (PO), Polyethylen (PE) oder Polypropylen (PP), Ethylen/Propylen-Copolymere (EPM) und Ethylen/Propylen/Dien-Terpolymere (EPDM), wobei die Kunststoffe bevorzugt mittels Plasma, Corona oder Flammen oberflächenbehandelt sein können;
- Faserverstärkte Kunststoffe, wie Kohlefaser-verstärkte Kunststoffe (CFK), Glasfaser-verstärkte Kunststoffe (GFK) und Sheet Moulding Compounds (SMC);
- beschichtete Substrate, wie pulverbeschichtete Metalle oder Legierungen;
- Farben und Lacke, insbesondere Automobildecklacke.
Die Substrate können bei Bedarf vor dem Applizieren des Kleb- oder Dichtstoffes vorbehandelt werden. Derartige Vorbehandlungen umfassen insbesondere physikalische und/oder chemische Reinigungsverfahren, beispielsweise Schleifen, Sandstrahlen, Bürsten oder dergleichen, oder Behandeln mit Reinigern oder Lösemitteln oder das Aufbringen eines Haftvermittlers, einer Haftvermittlerlösung oder eines Primers.
Nach dem Verkleben oder Abdichten der Substrate **S1** und **S2** mittels einer erfindungsgemässen Zusammensetzung wird ein verklebter oder abgedichteter Artikel erhalten. Ein derartiger Artikel kann ein Bauwerk sein, insbesondere ein Bauwerk des Hoch- oder Tiefbaus, oder er kann ein Transportmittel sein, beispielsweise ein Fahrzeug zu Wasser oder zu Lande, insbesondere ein Automobil, ein Bus, ein Lastkraftwagen, ein Zug oder ein Schiff, oder ein Anbauteil davon.

### Beispiele

Im Folgenden sind Ausführungsbeispiele aufgeführt, welche die beschriebene Erfindung näher erläutern sollen. Selbstverständlich ist die Erfindung nicht auf diese beschriebenen Ausführungsbeispiele beschränkt.

Als "Normklima" wird eine Temperatur von 23±1 °C und eine relative Luftfeuchtigkeit von 50±5% bezeichnet. "NK" steht für "Normklima".

**Viskositäten** wurden bestimmt auf einem thermostatisierten Kegel-Platten-Viskosimeter Rheotec RC30 (Kegeldurchmesser 50 mm, Kegelwinkel 1°, Kegelspitze-Platten-Abstand 0.05 mm, Scherrate 10 s⁻¹) bei einer Temperatur von 20 °C.

### 1. Herstellung von Hydroxysilanen

### Hydroxysilan HS-1: N-(3-Triethoxysilylpropyl)-4-hydroxyoctanamid

In einem Rundkolben wurden 20.0 g (90.4 mmol) 3-Aminopropyl-triethoxysilan (Dynasylan^{®} AMEO von Evonik Degussa) und 13.2 g (93.1 mmol) γ-Octalacton unter Stickstoffatmosphäre während ca. 8h bei 140°C gerührt, bis mittels IR kein Reaktionsfortschritt mehr festgestellt wurde. Das Rohprodukt wurde während 30 Minuten bei 80°C und ca. 2 mbar nachbehandelt. Es wurde ein flüssiges Produkt mit einem theoretischen OH-Equivalentgewicht von 363.3 g erhalten.

### Hydroxysilan HS-2: N-(3-Triethoxysilylpropyl)-5-hydroxydecanamid

20.0 g (90.4 mmol) 3-Aminopropyl-triethoxysilan und 15.8 g (93.1 mmol) 5-Decalacton wurden wie für das Hydroxysilan ***HS-1*** beschrieben umgesetzt. Es wurde ein flüssiges Produkt mit einem theoretischen OH-Equivalentgewicht von 392.2 g erhalten.

### Hydroxysilan HS-3: N-(3-Triethoxysilylpropyl)-6-hydroxydecanamid

20.0 g (90.4 mmol) 3-Aminopropyl-triethoxysilan und 15.8 g (93.1 mmol) ε-Decalacton wurden wie für das Hydroxysilan ***HS-1*** beschrieben umgesetzt. Es wurde ein flüssiges Produkt mit einem theoretischen OH-Equivalentgewicht von 392.2 g erhalten.

### Hydroxysilan HS-4 (Vergleich): N-(3-Triethoxysilylpropyl)-4-hydroxybutan-amid

20.0 g (90.4 mmol) 3-Aminopropyl-triethoxysilan und 8.0 g (93.1 mmol) y-Butyrolacton wurden wie für das Hydroxysilan ***HS-1*** beschrieben umgesetzt. Es wurde ein flüssiges Produkt mit einem theoretischen OH-Equivalentgewicht von 307.7 g erhalten.

### Hydroxysilan HS-5 (Vergleich): N-(3-Triethoxysilylpropyl)-5-hydroxypentanamid

20.0 g (90.4 mmol) 3-Aminopropyl-triethoxysilan und 9.3 g (93.1 mmol) 5-Valeroacton wurden wie für das Hydroxysilan ***HS-1*** beschrieben umgesetzt. Es wurde ein flüssiges Produkt mit einem theoretischen OH-Equivalentgewicht von 321.5 g erhalten.

### Hydroxysilan HS-6 (Vergleich): N-(3-Triethoxysilylpropyl)-6-hydroxyhexanamid

20.0 g (90.4 mmol) 3-Aminopropyl-triethoxysilan und 10.6 g (93.1 mmol) ε-Caprolacton wurden wie für das Hydroxysilan ***HS-1*** beschrieben umgesetzt. Es wurde ein flüssiges Produkt mit einem theoretischen OH-Equivalentgewicht von 335.6 g erhalten.

### Hydroxysilan HS-7 (Vergleich)

20.0 g (90.4 mmol) 3-Aminopropyl-triethoxysilan und 9.5 g (93.1 mmol) 1,2-Propylencarbonat wurden analog Beispiel 1 in US 5,587,502 umgesetzt. Es wurde ein flüssiges Produkt mit einem theoretischen OH-Equivalentgewicht von 323.5 g erhalten.

### Hydroxysilan HS-8 (Vergleich)

20.0 g (90.4 mmol) 3-Aminopropyl-triethoxysilan und 8.2 g (93.1 mmol) Ethylencarbonat wurden analog Beispiel 1 in US 5,587,502 umgesetzt. Es wurde ein flüssiges Produkt mit einem theoretischen OH-Equivalentgewicht von 309.5 g erhalten.

### Hydroxysilan HS-9 (Vergleich)

20.0 g (90.4 mmol) 3-Aminopropyl-triethoxysilan und 7.5 g (87.6 mmol) β-Butyrolacton wurden analog Beispiel 1 in US 5,587,502 umgesetzt. Es wurde ein flüssiges Produkt mit einem theoretischen OH-Equivalentgewicht von 307.5 g erhalten.

### Hydroxysilan HS-10 (Vergleich)

20.0 g (90.4 mmol) 3-Aminopropyl-triethoxysilan und 7.5 g (87.6 mmol) β-Butyrolacton wurden analog Beispiel 1 in US 5,587,502 umgesetzt. Das Rohprodukt wurde 30 Minuten bei 80°C und ca. 2 mbar nachbehandelt. Es wurde ein flüssiges Produkt mit einem theoretischen OH-Equivalentgewicht von 307.5 g erhalten.

### Hydroxysilan HS-11: N-(3-Triethoxysilylpropyl)-4-hydroxypentanamid

20.0 g (90.4 mmol) 3-Aminopropyl-triethoxysilan und 10.9 g (108.5 mmol) y-Valerolacton wurden wie für das Hydroxysilan ***HS-1*** beschrieben umgesetzt. Es wurde ein flüssiges Produkt mit einem theoretischen OH-Equivalentgewicht von 321.5 g erhalten.

### 2. Herstellung von Silangruppen-haltigen Polymeren

### Polymere SP-1 bis -5 und SP-13 und Vergleichs-Polymere SP-6 bis SP-12

Für jedes Polymer wurden 100 Gewichtsteile (GT) des in der Tabelle 1 angegebenen Isocyanatgruppen-haltigen Polymers *Polymer-1, -2* oder *-3* mit dem in der Tabelle 1 angegebenen Hydroxysilan vermischt, wobei vorerst pro Equivalent Isocyanatgruppen des Isocyanatgruppen-haltigen Polymers jeweils theoretisch 1.10 mol Hydroxysilan eingesetzt wurden. Diese Mischung wurde unter Stickstoffatmosphäre während 2 Stunden bei 90 °C gerührt und anschliessend wurde mittels IR-Spektroskopie kontrolliert, ob in der Reaktionsmischung noch Isocyanatgruppen vorhanden waren. Falls noch Isocyanatgruppen nachgewiesen werden konnten, wurden weitere 0.05 mol Hydroxysilan pro anfänglich vorhandenes Equivalent Isocyanatgruppen zugegeben und nach weiteren 30 Minuten bei 90 °C mittels IR-Spektroskopie erneut kontrolliert, ob noch Isocyanatgruppen nachgewiesen werden konnten. Falls ja, wurden weitere 0.10 mol Hydroxysilan pro anfänglich vorhandenes Equivalent Isocyanatgruppen zugegeben und nach weiteren 30 Minuten bei 90 °C mittels IR-Spektroskopie erneut kontrolliert, ob noch Isocyanatgruppen nachgewiesen werden konnten. Dieser Vorgang wurde so lange wiederholt, bis in der Reaktionsmischung keine Isocyanatgruppen mehr nachgewiesen wurden. Eine Ausnahme für dieses Vorgehen bildeten die Vergleichs-Polymere ***SP-11*** und ***SP-12.*** Anhand der IR-Spektren waren nach der Zugabe der ersten Portion Hydroxysilan noch Isocyanatgruppen vorhanden, bei ***SP-11*** in der Grössenordung von 5 % und bei ***SP-12*** in der Grössenordnung von 30 % der ursprünglich vorhandenen Isocyanatgruppen. Trotzdem wurden bei diesen beiden Polymeren kein weiteres Hydroxysilan zugegeben. Anschliessend wurde die Reaktionsmischung abgekühlt und unter Ausschluss von Feuchtigkeit aufbewahrt. Die jeweilige Zusammensetzung der Silangruppen-haltigen Polymere ist in der Tabelle 1 angegeben. Die insgesamt verwendete Anzahl mol Hydroxysilan pro Equivalent Isocyanatgruppen ist in Tabelle 1 angegeben, abgekürzt mit **"HO-Silan** / **NCO".**

Die Eigenschaften der erhaltenen Silangruppen-haltigen Polymere sind in der Tabelle 1 angegeben.

Das ***Polymer-1*** wurde hergestellt, indem 720 g Polyol Acclaim^{®} 12200 (Bayer Material Science; low monol Polyoxypropylendiol; OH-Zahl 11.0 mg KOH/g; Wassergehalt ca. 0.02 Gewichts-%), 34.5 g Isophorondiisocyanat (Vestanat^{®} IPDI, Evonik Degussa), 80.0 g Diisodecylphtalat und 0.2 g Dibutylzinndilaurat unter Stickstoffatmosphäre vermischt, unter stetigem Rühren auf 90 °C aufgeheizt und auf dieser Temperatur belassen wurden, bis der titrimetrisch bestimmte Gehalt an freien Isocyanatgruppen einen Wert von 0.73 Gewichts-% erreicht hatte. Das Produkt wurde auf Raumtemperatur abgekühlt und unter Ausschluss von Feuchtigkeit aufbewahrt.

Das ***Polymer-2*** wurde hergestellt, indem 720 g Polyol Acclaim^{®} 12200 (Bayer Material Science; low monol Polyoxypropylendiol; OH-Zahl 11.0 mg KOH/g; Wassergehalt ca. 0.02 Gewichts-%), 26.1 g Toluylendiisocyanat (Desmodur^{®} T 80 P, Bayer), 75.4 g Diisodecylphtalat und 0.2 g Dibutylzinndilaurat unter Stickstoffatmosphäre vermischt, unter stetigem Rühren auf 60 °C aufgeheizt und auf dieser Temperatur belassen wurden, bis der titrimetrisch bestimmte Gehalt an freien Isocyanatgruppen einen Wert von 0.72 Gewichts-% erreicht hatte. Das Produkt wurde auf Raumtemperatur abgekühlt und unter Ausschluss von Feuchtigkeit aufbewahrt.

Das ***Polymer-3*** wurde hergestellt, indem 600 g Polyol Acclaim^{®} 4200 N (Bayer Material Science; low monol Polyoxypropylendiol; OH-Zahl 28.1 mg KOH/g; Wassergehalt ca. 0.02 Gewichts-%), 54.1 g Isophorondiisocyanat (Vestanat^{®} IPDI, Evonik Degussa), 80.0 g Diisodecylphtalat und 0.2 g Dibutylzinndilaurat unter Stickstoffatmosphäre vermischt, unter stetigem Rühren auf 90 °C aufgeheizt und auf dieser Temperatur belassen wurden, bis der titrimetrisch bestimmte Gehalt an freien Isocyanatgruppen einen Wert von 1.00 Gewichts-% erreicht hatte. Das Produkt wurde auf Raumtemperatur abgekühlt und unter Ausschluss von Feuchtigkeit aufbewahrt.

**Tabelle 1: Zusammensetzung und Eigenschaften der erfindungsgemässen Silangruppen-haltigen Polymere SP-1 bis SP-5 und SP-13 und der Vergleichs-Polymere SP-6 bis SP-12. "Vgl." steht für "Vergleich"**

| **Polymer** | ***SP-1*** | ***SP-2*** | ***SP-3*** | ***SP-4*** | ***SP-5*** | ***SP-13*** | ***SP-6 (Vgl.)*** | ***SP-7 (Vgl.)*** | ***SP-8 (Vgl.)*** | ***SP-9 (Vgl.)*** | ***SP-10 (Vgl.)*** | ***SP-11 (Vgl.)*** | ***SP-12 (Vgl.)*** |
|---|---|---|---|---|---|---|---|---|---|---|---|---|---|
| *Polymer-1* | 100.0 | 100.0 | 100.0 | - | - | 100.0 | 100.0 | 100.0 | 100.0 | 100.0 | 100.0 | 100.0 | 100.0 |
| *Polymer-2* | - | - | - | 100.0 | - | - | - | - | - | - | - | - | - |
| *Polymer-3* | - | - | - | - | 100.0 | - | - | - | - | - | - | - | - |
| Hydroxysilan | ***HS-1*** 6.92 | ***HS-2*** 7.46 | ***HS-3*** 7.46 | ***HS-1*** 6.93 | ***HS-1*** 9.52 | ***HS-11*** 6.12 | ***HS-4*** 9.33 | ***HS-5*** 9.20 | ***HS-6*** 7.24 | ***HS-7*** 6.10 | ***HS-8*** 5.90 | ***HS-9*** 5.86 | ***HS-10*** 5.86 |
| HO-Silan / NCO | 1.10 | 1.10 | 1.10 | 1.10 | 1.10 | 1.10 | 1.75 | 1.65 | 1.25 | 1.10 | 1.10 | 1.10* | 1.10* |
| Viskosität [Pa·s] | 99 | 98 | 135 | 82 | 98 | 129 | 185 | 131 | 112 | 52 | 69 | 71 | 51 |

| | | | | | | | | | | | | | |
|---|---|---|---|---|---|---|---|---|---|---|---|---|---|
| * es waren noch Isocyanatgruppen vorhanden | | | | | | | | | | | | | |

Die hohen Einsatzmengen der Hydroxysilane ***HS-4, HS-5*** und ***HS-6,*** die benötigt wurden, um die Vergleichs-Polymere ***SP-6, SP-7*** und ***SP-8*** herzustellen, sind ein Hinweis darauf, dass der OH-Gehalt dieser Hydroxysilane weit unter dem theoretischen Wert liegt, was vermutlich auf einen erheblichen Gehalt an cyclischen Silanverbindungen gemäss Formel (VI) zurückzuführen ist.

Zu Vergleichszwecken wurden zusätzlich die folgenden Silangruppen-haltigen Polymere hergestellt:

### Polymer SP-14 (Vergleich)

Zu 100.0 g des vorgängig beschriebenen *Polymer-1* wurden 7.50 g (19.1 mmol, NH/NCO = 1.10) N-(3-Triethoxysilylpropyl)-asparaginsäurediethylester zugegeben. Diese Mischung wurde unter Stickstoffatmosphäre während 2 Stunden bei 90 °C gerührt, dann abgekühlt und unter Ausschluss von Feuchtigkeit aufbewahrt. Mittels IR-Spektroskopie waren keine Isocyanatgruppen mehr nachweisbar.

### Polymer SP-15 (Vergleich)

200.0 g Polyol Acclaim^{®} 12200 (Bayer Material Science; low monol Polyoxypropylendiol; OH-Zahl 11.0 mg KOH/g; Wassergehalt ca. 0.02 Gewichts-%), 22.2 g Diisodecylphtalat, 10.4 g Isocyanatopropyl-triethoxysilan und 0.2 g Dibutylzinndilaurat wurden unter Stickstoffatmosphäre vermischt, unter stetigem Rühren auf 80 °C aufgeheizt und 2 Stunden auf dieser Temperatur belassen, bis mittels IR-Spektroskopie kein Reaktionsfortschritt mehr festgestellt wurde. Die restlichen Isocyanatgruppen wurden durch Zugabe von 2.0 g Ethanol bei 60°C unter Stickstoffatmosphäre während 30 Minuten umgesetzt und die Mischung anschliessend während 30 Minuten bei 80°C und ca. 2 mbar nachbehandelt. Das Produkt wurde auf Raumtemperatur abgekühlt und unter Ausschluss von Feuchtigkeit aufbewahrt

### 3. Herstellung von feuchtigkeitshärtenden Zusammensetzungen

### Zusammensetzungen Z-1 bis Z-5 und Vergleichs-Zusammensetzungen Z-6 bis Z-9

Für jede Zusammensetzung wurden die in der Tabelle 2 angegebenen Inhaltsstoffe in den angegebenen Mengen (in Gewichtsteilen) mittels eines Zentrifugalmischers (SpeedMixer™ DAC 150, FlackTek Inc.) unter Feuchtigkeitsausschluss vermischt und aufbewahrt. Jede Zusammensetzung wurde folgendermassen geprüft:
Zur Bestimmung der **Hautbildungszeit** wurden einige Gramm der Zusammensetzung in einer Schichtdicke von ca. 2 mm auf Pappkarton aufgetragen und im Normklima die Zeitdauer bestimmt, bis beim leichten Antippen der Oberfläche der Zusammensetzung mittels einer Pipette aus LDPE erstmals keine Rückstände auf der Pipette mehr zurückblieben.

Zur Bestimmung der mechanischen Eigenschaften wurde die Zusammensetzung auf einer PTFE-beschichteten Folie zu einem Film von 2 mm Dicke ausgegossen, dieser während 2 Wochen im Normklima gelagert, einige Hanteln mit einer Länge von 75 mm bei einer Steglänge von 30 mm und einer Stegbreite von 4 mm aus dem Film ausgestanzt und diese gemäss DIN EN 53504 bei einer Zuggeschwindigkeit von 200 mm/min auf **Zugfestigkeit** (Bruchkraft), **Bruchdehnung** und **E-Modul** (E-Modul bei 0.5-50 % Dehnung) geprüft.

Die **Shore A-Härte** wurde bestimmt nach DIN 53505 an während 14 Tagen im Normklima ausgehärteten Prüfkörpern.

Diese Resultate sind mit dem Zusatz **"NK:"** versehen.

Als Mass für die Wärmebeständigkeit wurden einige Hanteln, bzw. der Shore A-Prüfkörper, anschliessend an die 2 Wochen im Normklima zusätzlich während 1 Woche bei 90 °C in einem Umluftofen gelagert und anschliessend auf dieselbe Weise auf Zugfestigkeit, Bruchdehnung und E-Modul, bzw. auf Shore A-Härte, geprüft. Diese Resultate sind mit dem Zusatz **"90°C:"** versehen.

Die Resultate sind in der Tabellen 2 angegeben.

**Tabelle 2: Zusammensetzung und Eigenschaften der erfindungsgemässen Zusammensetzungen Z-1 bis Z-5 und der Vergleichs-Zusammensetzungen Z-6 bis Z-9. "Vgl." steht für "Vergleich"**

| **Zusammensetzung** | | ***Z-1*** | ***Z-2*** | ***Z-3*** | ***Z-4*** | ***Z-5*** | ***Z-6 (Vgl.)*** | ***Z-7 (Vgl.)*** | ***Z-8 (Vgl.)*** | ***Z-9 (Vgl.)*** |
|---|---|---|---|---|---|---|---|---|---|---|
| Polymer (Typ, Menge) | | ***SP-1,*** 94.83 | ***SP-2,*** 94.83 | ***SP-3,*** 94.83 | ***SP-4,*** 94.83 | ***SP-5,*** 94.83 | ***SP-6,*** 94.83 | ***SP-7,*** 94.83 | ***SP-8,*** 94.83 | ***SP-9,*** 94.83 |
| Dynasylan^{®} AMEO¹ | | 3.80 | 3.80 | 3.80 | 3.80 | 3.80 | 3.80 | 3.80 | 3.80 | 3.80 |
| Polycat^{®} DBU ² | | 0.34 | 0.34 | 0.34 | 0.34 | 0.34 | 0.34 | 0.34 | 0.34 | 0.34 |
| Tyzor^{®} IBAY ³ | | 1.03 | 1.03 | 1.03 | 1.03 | 1.03 | 1.03 | 1.03 | 1.03 | 1.03 |
| | | | | | | | | | | |
| Hautbildungszeit [min] | | 34 | 85 | 110 | 90 | 120 | 26 | 50 | 120 | 180 |
| | | | | | | | | | | |
| **NK:** | Shore A | 29 | 27 | 16 | 34 | 45 | 28 | 20 | 12 | 42 |
| Zugfestigkeit [MPa] | | 0.57 | 0.76 | 0.40 | 0.63 | 0.90 | 0.68 | 0.67 | 0.61 | 0.75 |
| Bruchdehnung [%] | | 133 | 200 | 152 | 103 | 88 | 160 | 200 | 198 | 96 |
| E-Modul [MPa] | | 0.49 | 0.44 | 0.22 | 0.68 | 1.06 | 0.46 | 0.26 | 0.19 | 0.89 |
| | | | | | | | | | | |
| **90 °C:** | Shore A | 24 | 23 | 13 | 13 | 36 | 20 | 15⁵ | 9⁵ | 24⁵ |
| Zugfestigkeit [MPa] | | 0.24 | 0.30 | 0.19 | 0.24 | 0.32 | 0.28 | n.m.⁴ | n.m.⁴ | n.m.⁴ |
| Bruchdehnung [%] | | 76 | 91 | 73 | 55 | 47 | 88 | n.m.⁴ | n.m.⁴ | n.m.⁴ |
| E-Modul [MPa] | | 0.25 | 0.27 | 0.17 | 0.32 | 0.51 | 0.26 | n.m.⁴ | n.m.⁴ | n.m.⁴ |

| | | | | | | | | | | |
|---|---|---|---|---|---|---|---|---|---|---|
| ¹ 3-Aminopropyl-triethoxysilan von Evonik Degussa ² 1,8-Diazabicyclo[5.4.0]undec-7-en von Air Products ³ Titan(IV)-Bis(Ethylacetoacetato)-Komplex von Du Pont / Dorf Ketal ⁴ "n.m." steht für "nicht messbar", die Hanteln sind zerflossen ⁵ Prüfkörper mit harter Oberfläche und zerflossenem Kern | | | | | | | | | | |

### Zusammensetzungen Z-10 bis Z-12 und Vergleichs-Zusammensetzungen Z-13 bis Z-14

Für jede Zusammensetzung wurden 15.00 Gewichtsteile (GT) des in der Tabelle 3 angegebenen Silangruppen-haltige Polymers, 20.00 GT Diisodecylphtalat, 2.00 GT *Thixotropierpaste,* 1.00 GT Vinyltriethoxysilan (Dynasylan^{®} VTEO von Evonik Degussa), 10.00 GT gefälltes beschichtetes Calciumcarbonat (Socal^{®} U 1 S2 von Solvay), 50.00 GT Calciumcarbonat (Omyacarb^{®} 5 GU von Omya), 0.75 GT 3-Aminopropyl-triethoxysilan (Dynasylan^{®} AMEO von Evonik Degussa), 0.20 GT 1,8-Diazabicyclo[5.4.0]undec-7-en (Polycat^{®} DBU von Air Products) und 1.00 GT Titan(IV)-Bis(Ethylacetoacetato)-Komplex (Tyzor^{®} IBAY von Du Pont / Dorf Ketal) mittels eines Zentrifugalmischers (SpeedMixer™ DAC 150, FlackTek Inc.) unter Feuchtigkeitsausschluss vermischt und aufbewahrt. Jede Zusammensetzung wurde folgendermassen geprüft:
Als Mass für die Lagerstabilität wurde die Viskosität nach Lagerung unter Ausschluss von Feuchtigkeit während 7 Tagen im NK ("**Viskosität (NK)**") und ein zweites Mal nach einer zusätzlichen Lagerung während 7 Tagen bei 60 °C ("**Viskosität (60°C)**") bestimmt.
Die Hautbildungszeit, Zugfestigkeit, Bruchdehnung, E-Moduli und Shore A-Härte wurden jeweils bestimmt wie für die Zusammensetzung ***Z-1*** beschrieben. Für die Wärmelagerung wurden die Hanteln aber anschliessend an die 2 Wochen im Normklima während 4 Wochen bei 100 °C gelagert. Diese Resultate sind mit dem Zusatz "**100°C:**" versehen.
Die Resultate sind in der Tabellen 3 angegeben.

Die *Thixotropierpaste* wurde hergestellt, indem in einem Vakuummischer 300 g Diisodecylphthalat (Palatinol^{®} Z, BASF) und 48g 4,4'-Methylendiphenyldiisocyanat (Desmodur^{®} 44 MC L, Bayer) vorgelegt und leicht aufgewärmt und anschliessend unter starkem Rühren 27 g Monobutylamin langsam zugetropft wurden. Die entstehende Paste wurde unter Vakuum und Kühlung eine Stunde weitergerührt.

**Tabelle 3: Zusammensetzung und Eigenschaften der erfindungsgemässen Zusammensetzungen Z-10 bis Z-12 und der Vergleichs-Zusammensetzungen Z-13 bis Z-14. "Vgl." steht für "Vergleich"**

| **Zusammensetzung** | | ***Z-10*** | ***Z-11*** | ***Z-12*** | ***Z-13 (Vgl.)*** | ***Z-14 (Vgl.)*** |
|---|---|---|---|---|---|---|
| Polymer | | ***SP-1*** | ***SP-2*** | ***SP-4*** | ***SP-6*** | ***SP-7*** |
| | | | | | | |
| Viskosität (NK) [Pa·s] | | 66 | 52 | 26 | 62 | 59 |
| Viskosität (60°C) [Pa·s] | | 90 | 74 | 29 | 71 | 64 |
| Hautbildungszeit [min] | | 45 | 85 | 85 | 40 | 75 |
| | | | | | | |
| **NK:** | Shore A | 26 | 21 | 28 | 25 | 18 |
| Zugfestigkeit [MPa] | | 0.96 | 0.70 | 0.79 | 0.82 | 0.65 |
| Bruchdehnung [%] | | 570 | 475 | 437 | 315 | 240 |
| E-Modul [MPa] | | 0.55 | 0.43 | 68 | 0.57 | 0.44 |
| | | | | | | |
| **100°C,:** | Shore A | 21 | 17 | 18 | n.m.¹ | n.m.¹ |
| Zugfestigkeit [MPa] | | 0.21 | 0.28 | 0.39 | n.m.¹ | n.m.¹ |
| Bruchdehnung [%] | | 85 | 100 | 71 | n.m.¹ | n.m.¹ |
| E-Modul [MPa] | | 0.24 | 0.28 | 0.58 | n.m.¹ | n.m.¹ |

| | | | | | | |
|---|---|---|---|---|---|---|
| ¹ "n.m." steht für "nicht messbar", die Prüfkörper sind zerflossen | | | | | | |

### Zusammensetzungen Z-15 und Z-16 und Vergleichs-Zusammensetzungen Z-17 bis Z-30

Für jede Zusammensetzung wurden die in den Tabellen 4 und 5 angegebenen Inhaltsstoffe in den angegebenen Mengen (in Gewichtsteilen) mittels eines Zentrifugalmischers (SpeedMixer™ DAC 150, FlackTek Inc.) unter Feuchtigkeitsausschluss vermischt und aufbewahrt. Jede Zusammensetzung wurde geprüft wie für die Zusammensetzung ***Z-10*** beschrieben.
Die Resultate sind in den Tabellen 4 und 5 angegeben.

Aus den Tabellen 4 und 5 ist insbesondere ersichtlich, dass mit den erfindungsgemässen Silangruppen-haltigen Polymeren Zusammensetzungen erhältlich sind, die eine schnelle Hautbildungszeit aufweisen und über eine hervorragende Wärmestabilität verfügen.

**Tabelle 4: Zusammensetzung und Eigenschaften der erfindungsgemässen Zusammensetzung Z-15 und der Vergleichs-Zusammensetzungen Z-17 bis Z-23. "Vgl." steht für "Vergleich"**

| **Zusammensetzung** | | ***Z-15*** | ***Z-17 (Vgl.)*** | ***Z-18 (Vgl.)*** | ***Z-19 (Vgl.)*** | ***Z-20 (Vgl.)*** | ***Z-21 (Vgl.)*** | ***Z-22 (Vgl.)*** | ***Z-23 (Vgl.)*** |
|---|---|---|---|---|---|---|---|---|---|
| Polymer | | ***SP-13,*** 15.00 | ***SP-10,*** 15.00 | ***SP-9,*** 15.00 | ***SP-6,*** 15.00 | ***SP-11,*** 15.00 | ***SP-12,*** 15.00 | ***SP-14,*** 15.00 | ***SP-15,*** 15.00 |
| Diisodecylphtalat | | 20.00 | 20.00 | 20.00 | 20.00 | 20.00 | 20.00 | 20.00 | 20.00 |
| *Thixotropierpaste* | | 2.00 | 2.00 | 2.00 | 2.00 | 2.00 | 2.00 | 2.00 | 2.00 |
| Vinyltriethoxysilan | | 1.00 | 1.00 | 1.00 | 1.00 | 1.00 | 1.00 | 1.00 | 1.00 |
| Socal^{®} U 1 S2 | | 10.00 | 10.00 | 10.00 | 10.00 | 10.00 | 10.00 | 10.00 | 10.00 |
| Omyacarb^{®} 5 G U | | 50.00 | 50.00 | 50.00 | 50.00 | 50.00 | 50.00 | 50.00 | 50.00 |
| Geniosil^{®} GT-94 ¹ | | 0.75 | 0.75 | 0.75 | 0.75 | 0.75 | 0.75 | 0.75 | 0.75 |
| Polycat^{®} DBU | | 0.10 | 0.10 | 0.10 | 0.10 | 0.10 | 0.10 | 0.10 | 0.10 |
| Tyzor^{®} IBAY | | 1.25 | 1.25 | 1.25 | 1.25 | 1.25 | 1.25 | 1.25 | 1.25 |
| | | | | | | | | | |
| Hautbildungszeit [min] | | 40 | 45 | 95 | 45 | 35 | 20 | 100 | 90 |
| | | | | | | | | | |
| **NK:** | Shore A | 36 | 26 | 27 | 22 | 35 | 34 | 30 | 37 |
| Zugfestigkeit [MPa] | | 1.10 | 0.90 | 1.05 | 0.98 | 1.04 | 1.06 | 0.89 | 0.98 |
| Bruchdehnung [%] | | 250 | 120 | 145 | 125 | 135 | 185 | 155 | 120 |
| E-Modul [MPa] | | 1.01 | 0.75 | 0.88 | 0.85 | 0.90 | 0.93 | 0.77 | 1.21 |
| | | | | | | | | | |
| **100°C:** | Shore A | 36 | 15 | 21 | 17 | 14 | 15 | 27 | 40 |
| Zugfestigkeit [MPa] | | 0.73 | n.m.² | 0.71 | n.m.² | n.m.² | n.m.² | 0.31 | n.m.² |
| Bruchdehnung [%] | | 110 | n.m.² | 105 | n.m.² | n.m.² | n.m.² | 25 | n.m.² |
| E-Modul [MPa] | | 0.77 | n.m.² | 0.66 | n.m.² | n.m.² | n.m.² | - | n.m.² |

| | | | | | | | | | |
|---|---|---|---|---|---|---|---|---|---|
| ¹ N-(2-Aminoethyl)-3-aminopropyltriethoxysilan von Wacker ² "n.m." steht für "nicht messbar", die Prüfkörper sind zerflossen | | | | | | | | | |

**Tabelle 5: Zusammensetzung und Eigenschaften der erfindungsgemässen Zusammensetzung Z-16 und der Vergleichs-Zusammensetzungen Z-24 bis Z-30. "Vgl." steht für "Vergleich"**

| **Zusammensetzung** | | ***Z-16*** | ***Z-24 (Vgl.)*** | ***Z-25 (Vgl.)*** | ***Z-26 (Vgl.)*** | ***Z-27 (Vgl.)*** | ***Z-28 (Vgl.)*** | ***Z-29 (Vgl.)*** | ***Z-30 (Vgl.)*** |
|---|---|---|---|---|---|---|---|---|---|
| Polymer | | ***SP-13*,** 15.00 | ***SP-10,*** 15.00 | ***SP-9,*** 15.00 | ***SP-6,*** 15.00 | ***SP-11,*** 15.00 | ***SP-12,*** 15.00 | ***SP-14,*** 15.00 | ***SP-15,*** 15.00 |
| Diisodecylphtalat | | 20.00 | 20.00 | 20.00 | 20.00 | 20.00 | 20.00 | 20.00 | 20.00 |
| *Thixotropierpaste* | | 2.00 | 2.00 | 2.00 | 2.00 | 2.00 | 2.00 | 2.00 | 2.00 |
| Vinyltriethoxysilan | | 1.00 | 1.00 | 1.00 | 1.00 | 1.00 | 1.00 | 1.00 | 1.00 |
| Socal^{®} U 1 S2 | | 10.00 | 10.00 | 10.00 | 10.00 | 10.00 | 10.00 | 10.00 | 10.00 |
| Omyacarb^{®} 5 G U | | 50.00 | 50.00 | 50.00 | 50.00 | 50.00 | 50.00 | 50.00 | 50.00 |
| Tyzor^{®} IBAY | | 1.25 | 1.25 | 1.25 | 1.25 | 1.25 | 1.25 | 1.25 | 1.25 |
| | | | | | | | | | |
| Hautbildungszeit [min] | | 50 | 70 | 75 | 50 | 80 | >300 | >300 | 95 |
| | | | | | | | | | |
| **NK:** | Shore A | 36 | 30 | 35 | 34 | 10 | n.m.¹ | 27 | 36 |
| Zugfestigkeit [MPa] | | 1.15 | 1.13 | 1.36 | 1.13 | 0.30 | n.m.¹ | 0.46 | 1.35 |
| Bruchdehnung [%] | | 160 | 135 | 160 | 125 | 105 | n.m.¹ | 95 | 115 |
| E-Modul [MPa] | | 0.91 | 0.81 | 0.98 | 0.88 | 0.30 | n.m.¹ | 0.41 | 1.23 |
| | | | | | | | | | |
| **100°C:** | Shore A | 33 | 19 | 20 | 16 | n.m.² | n.m.¹ | 25 | 43 |
| Zugfestigkeit [MPa] | | 0.87 | 0.59 | 0.72 | 0.61 | 0.11 | n.m.¹ | 0.76 | 1.08 |
| Bruchdehnung [%] | | 125 | 105 | 115 | 100 | 40 | n.m.¹ | 110 | 115 |
| E-Modul [MPa] | | 0.69 | 0.53 | 0.63 | 0.58 | - | n.m.¹ | 0.65 | 0.95 |

| | | | | | | | | | |
|---|---|---|---|---|---|---|---|---|---|
| ¹ "n.m." steht für "nicht messbar", die Zusammensetzung blieb flüssig ² "n.m." steht für "nicht messbar", die Prüfkörper sind zerflossen | | | | | | | | | |

## Patentansprüche

1. Polymer mit Endgruppen der Formel (I), welches frei ist von Isocyanatgruppen, 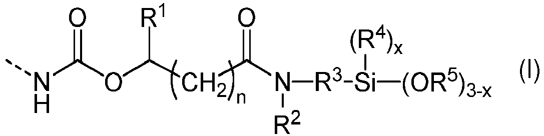 wobei
R¹ für eine Alkylgruppe mit 1 bis 12 C-Atomen steht;
R² für ein Wasserstoffatom oder für eine Alkylgruppe mit 1 bis 12 C-Atomen, welche gegebenenfalls Ether-Sauerstoff oder Amin-Stickstoff aufweist, steht;
R³ für einen linearen oder verzweigten Alkylen- oder Cycloalkylenrest mit 1 bis 12 C-Atomen, gegebenenfalls mit aromatischen Anteilen, und gegebenenfalls mit einem oder mehreren Heteroatomen, steht;
R⁴ für eine Alkylgruppe mit 1 bis 6 C-Atomen steht;
R⁵ für eine Alkylgruppe mit 1 bis 10 C-Atomen, welche gegebenenfalls eine oder mehrere Ether-Sauerstoffe aufweist, steht;
n für 2 oder 3 oder 4 steht; und
x für 0 oder 1 steht.

2. Polymer gemäss Anspruch 1, **dadurch gekennzeichnet, dass** der Rest R¹ für einen Rest R^{1a} steht, wobei R^{1a} für n-Butyl, n-Pentyl, n-Hexyl, n-Heptyl oder n-Octyl steht.

3. Polymer gemäss Anspruch 1 oder 2, **dadurch gekennzeichnet, dass** der Rest R³ ausgewählt ist aus der Gruppe bestehend aus 1,3-Propylen, 2-Methyl-1,3-propylen, 1,4-Butylen, 3-Methyl-1,4-butylen und 3,3-Dimethyl-1,4-butylen.

4. Polymer gemäss einem der Ansprüche 1 bis 3, **dadurch gekennzeichnet, dass** x für 0 steht.

5. Polymer gemäss einem der Ansprüche 1 bis 4, **dadurch gekennzeichnet, dass** es ein Molekulargewicht im Bereich von 1'000 bis 30'000 g/mol aufweist.

6. Polymer gemäss einem der Ansprüche 1 bis 5, **dadurch gekennzeichnet, dass** es mehrheitlich Polyoxyalkyleneinheiten aufweist.

7. Polymer gemäss einem der Ansprüche 1 bis 6, **dadurch gekennzeichnet, dass** die Endgruppen der Formel (I) mehrheitlich an cycloaliphatische Reste gebunden sind.

8. Polymer gemäss einem der Ansprüche 1 bis 7, **dadurch gekennzeichnet, dass** es 1 bis 4 Endgruppen der Formel (I) aufweist.

9. Vernetzter Kunststoff erhalten durch die Reaktion mindestens eines Polymers gemäss einem der Ansprüche 1 bis 8 mit Feuchtigkeit.

10. Verfahren zur Herstellung eines Polymers gemäss einem der Ansprüche 1 bis 8, **dadurch gekennzeichnet, dass** mindestens ein Hydroxysilan der Formel (II) mit mindestens einem Isocyanatgruppen-haltigen Polyurethanpolymer umgesetzt wird, 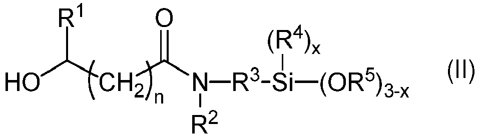 wobei
R¹ für eine Alkylgruppe mit 1 bis 12 C-Atomen steht;
R² für ein Wasserstoffatom oder für eine Alkylgruppe mit 1 bis 12 C-Atomen, welche gegebenenfalls Ether-Sauerstoff oder Amin-Stickstoff aufweist, steht;
R³ für einen linearen oder verzweigten Alkylen- oder Cycloalkylenrest mit 1 bis 20 C-Atomen, gegebenenfalls mit aromatischen Anteilen, und gegebenenfalls mit einem oder mehreren Heteroatomen, steht;
R⁴ für eine Alkylgruppe mit 1 bis 6 C-Atomen steht;
R⁵ für eine Alkylgruppe mit 1 bis 10 C-Atomen, welche gegebenenfalls eine oder mehrere Ether-Sauerstoffe aufweist, steht;
n für 2 oder 3 oder 4 steht; und
x für 0 oder 1 steht.

11. Hydroxysilan der Formel (II a), 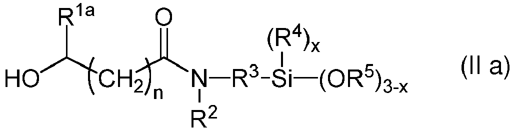 wobei
R^{1a} für n-Butyl, n-Pentyl, n-Hexyl, n-Heptyl oder n-Octyl steht;
R² für ein Wasserstoffatom oder für eine Alkylgruppe mit 1 bis 12 C-Atomen, welche gegebenenfalls Ether-Sauerstoff oder Amin-Stickstoff aufweist, steht;
R³ für einen linearen oder verzweigten Alkylen- oder Cycloalkylenrest mit 1 bis 12 C-Atomen, gegebenenfalls mit aromatischen Anteilen, und gegebenenfalls mit einem oder mehreren Heteroatomen, steht;
R⁴ für eine Alkylgruppe mit 1 bis 6 C-Atomen steht;
R⁵ für eine Alkylgruppe mit 1 bis 10 C-Atomen, welche gegebenenfalls eine oder mehrere Ether-Sauerstoffe aufweist, steht;
n für 2 oder 3 oder 4 steht; und
x für 0 oder 1 steht.

12. Isocyanatosilan der Formel (III a), 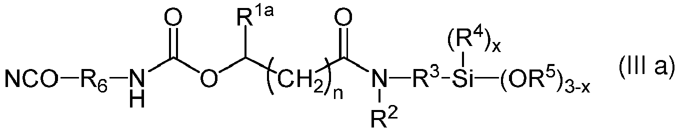 wobei
R^{1a} für n-Butyl, n-Pentyl, n-Hexyl, n-Heptyl oder n-Octyl steht;
R² für ein Wasserstoffatom oder für eine Alkylgruppe mit 1 bis 12 C-Atomen, welche gegebenenfalls Ether-Sauerstoff oder Amin-Stickstoff aufweist, steht;
R³ für einen linearen oder verzweigten Alkylen- oder Cycloalkylenrest mit 1 bis 12 C-Atomen, gegebenenfalls mit aromatischen Anteilen, und gegebenenfalls mit einem oder mehreren Heteroatomen, steht;
R⁴ für eine Alkylgruppe mit 1 bis 6 C-Atomen steht;
R⁵ für eine Alkylgruppe mit 1 bis 10 C-Atomen, welche gegebenenfalls eine oder mehrere Ether-Sauerstoffe aufweist, steht;
R⁶ für einen zweiwertigken Kohlenwasserstoffrest mit 4 bis 16 C-Atom steht;
n für 2 oder 3 oder 4 steht; und
x für 0 oder 1 steht.

13. Feuchtigkeitshärtende Zusammensetzung enthaltend mindestens ein Polymer gemäss einem der Ansprüche 1 bis 8 und mindestens einen weiteren Bestandteil.

14. Verwendung der feuchtigkeitshärtenden Zusammensetzung gemäss Anspruch 13 als elastischer Klebstoff und/oder elastischer Dichtstoff.

15. Ausgehärtete Zusammensetzung erhalten aus der Aushärtung der Zusammensetzung gemäss Anspruch 13 mit Feuchtigkeit.

## Claims

1. Polymer with end groups of formula (I), which is free of isocyanate groups, 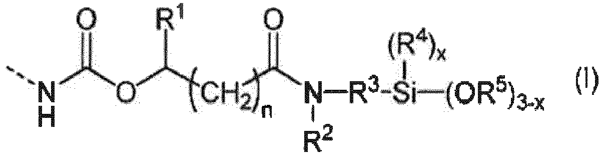 where
R¹ stands for an alkyl group having 1 to 12 C atoms;
R² stands for a hydrogen atom or for an alkyl group having 1 to 12 C atoms, which optionally comprises ether oxygen or amine nitrogen;
R³ stands for a linear or a branched alkylene or cycloalkylene residue having 1 to 12 C atoms, optionally with aromatic parts, and optionally with one or more heteroatoms;
R⁴ stands for an alkyl group having 1 to 6 C atoms;
R⁵ stands for an alkyl group having 1 to 10 C atoms, which optionally comprises one or more ether oxygens;
n stands for 2 or 3 or 4; and
x stands for 0 or 1.

2. Polymer according to Claim 1, **characterized in that** the residue R¹ stands for a residue R^{1a}, where R^{1a} stands for n-butyl, n-pentyl, n-hexyl, n-heptyl or n-octyl.

3. Polymer according to Claim 1 or 2, **characterized in that** the residue R³ is selected from the group consisting of 1,3-propylene, 2-methyl-1,3-propylene, 1,4-butylene, 3-methyl-1,4-butylene and 3,3-dimethyl-1,4-butylene.

4. Polymer according to one of Claims 1 to 3, **characterized in that** x stands for 0.

5. Polymer according to one of Claims 1 to 4, **characterized in that** it has a molecular weight in the range from 1000 to 30,000 g/mol.

6. Polymer according to one of Claims 1 to 5, **characterized in that** it consists mostly of polyoxyalkylene units.

7. Polymer according to one of Claims 1 to 6, **characterized in that** the end groups of formula (I) are mostly bound to cycloaliphatic residues.

8. Polymer according to one of Claims 1 to 7, **characterized in that** it has 1 to 4 end groups of formula (I).

9. Crosslinked plastic obtained by the reaction of at least one polymer according to one of Claims 1 to 8 with moisture.

10. Method for producing a polymer according to one of Claims 1 to 8, **characterized in that** at least one hydroxysilane of formula (II) is reacted with at least one polyurethane polymer containing isocyanate groups, 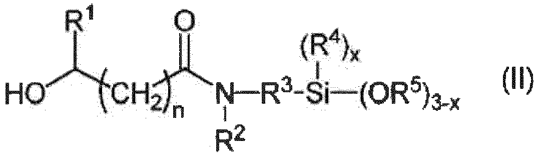 where
R¹ stands for an alkyl group having 1 to 12 C atoms;
R² stands for a hydrogen atom or for an alkyl group having 1 to 12 C atoms, which optionally comprises ether oxygen or amine nitrogen;
R³ stands for a linear or a branched alkylene or cycloalkylene residue having 1 to 20 C atoms, optionally with aromatic parts, and optionally with one or more heteroatoms;
R⁴ stands for an alkyl group having 1 to 6 C atoms;
R⁵ stands for an alkyl group having 1 to 10 C atoms, which optionally comprises one or more ether oxygens;
n stands for 2 or 3 or 4; and
x stands for 0 or 1.

11. Hydroxysilane of formula (II a), 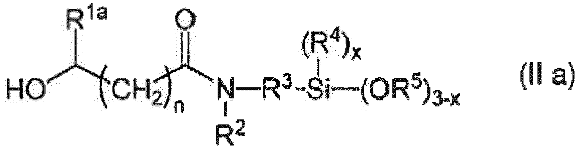 where
R^{1a} stands for n-butyl, n-pentyl, n-hexyl, n-heptyl or n-octyl;
R² stands for a hydrogen atom or for an alkyl group having 1 to 12 C atoms, which optionally comprises ether oxygen or amine nitrogen;
R³ stands for a linear or branched alkylene or cycloalkylene residue having 1 to 12 C atoms, optionally with aromatic parts, and optionally with one or more heteroatoms;
R⁴ stands for an alkyl group having 1 to 6 C atoms;
R⁵ stands for an alkyl group having 1 to 10 C atoms, which optionally comprises one or more ether oxygens;
n stands for 2 or 3 or 4; and
x stands for 0 or 1.

12. Isocyanatosilane of formula (III a), 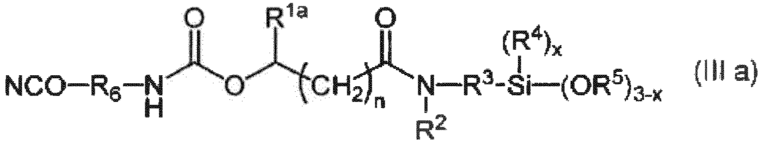 where
R^{1a} stands for n-butyl, n-pentyl, n-hexyl, n-heptyl or n-octyl;
R² stands for a hydrogen atom or for an alkyl group having 1 to 12 C atoms, which optionally comprises ether oxygen or amine nitrogen;
R³ stands for a linear or branched alkylene or cycloalkylene residue having 1 to 12 C atoms, optionally with aromatic parts, and optionally with one or more heteroatoms;
R⁴ stands for an alkyl group having 1 to 6 C atoms;
R⁵ stands for an alkyl group having 1 to 10 C atoms, which optionally comprises one or more ether oxygens;
R⁶ stands for a divalent hydrocarbon residue having 4 to 16 C atoms;
n stands for 2 or 3 or 4; and
x stands for 0 or 1.

13. Moisture-curing composition containing at least one polymer according to one of Claims 1 to 8 and at least one additional component.

14. Use of the moisture-curing composition according to Claim 13 as resilient adhesive and/or resilient sealant.

15. Cured composition obtained from the curing of the composition according to Claim 13 with moisture.

## Revendications

1. Polymère à groupes terminaux de formule (I), qui est exempt de groupes isocyanate 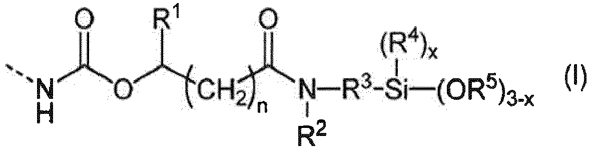 dans laquelle
R¹ représente un groupe alkyle de 1 à 12 atomes C ;
R² représente un atome d'hydrogène ou un groupe alkyle de 1 à 12 atomes C, qui comprend éventuellement un oxygène d'éther ou un azote d'amine ;
R³ représente un radical alkylène ou cycloalkylène linéaire ou ramifié de 1 à 12 atomes C, éventuellement avec des fractions aromatiques, et éventuellement avec un ou plusieurs hétéroatomes ;
R⁴ représente un groupe alkyle de 1 à 6 atomes C ;
R⁵ représente un groupe alkyle de 1 à 10 atomes C, qui comprend éventuellement un ou plusieurs oxygènes d'éther ;
n représente 2 ou 3 ou 4 ; et
x représente 0 ou 1.

2. Polymère selon la revendication 1, **caractérisé en ce que** le radical R¹ représente un radical R^{1a}, R^{1a} représentant n-butyle, n-pentyle, n-hexyle, n-heptyle ou n-octyle.

3. Polymère selon la revendication 1 ou 2, **caractérisé en ce que** le radical R³ est choisi dans le groupe constitué par le 1,3-propylène, le 2-méthyl-1,3-propylène, le 1,4-butylène, le 3-méthyl-1,4-butylène et le 3,3-diméthyl-1,4-butylène.

4. Polymère selon l'une quelconque des revendications 1 à 3, **caractérisé en ce que** x représente 0.

5. Polymère selon l'une quelconque des revendications 1 à 4, **caractérisé en ce qu'**il présente un poids moléculaire dans la plage allant de 1 000 à 30 000 g/mol.

6. Polymère selon l'une quelconque des revendications 1 à 5, **caractérisé en ce qu'**il comprend majoritairement des unités polyoxyalkylène.

7. Polymère selon l'une quelconque des revendications 1 à 6, **caractérisé en ce que** les groupes terminaux de formule (I) sont majoritairement reliés à des radicaux cycloaliphatiques.

8. Polymère selon l'une quelconque des revendications 1 à 7, **caractérisé en ce qu'**il comprend 1 à 4 groupes terminaux de formule (I).

9. Plastique réticulé obtenu par la réaction d'au moins un polymère selon l'une quelconque des revendications 1 à 8 avec de l'humidité.

10. Procédé de fabrication d'un polymère selon l'une quelconque des revendications 1 à 8, **caractérisé en ce qu'**au moins un hydroxysilane de formule (II) est mis en réaction avec au moins un polymère de polyuréthane contenant des groupes isocyanate, 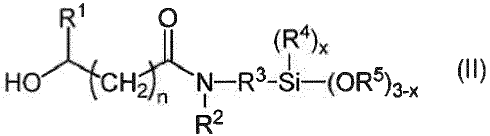 dans laquelle
R¹ représente un groupe alkyle de 1 à 12 atomes C ;
R² représente un atome d'hydrogène ou un groupe alkyle de 1 à 12 atomes C, qui comprend éventuellement un oxygène d'éther ou un azote d'amine ;
R³ représente un radical alkylène ou cycloalkylène linéaire ou ramifié de 1 à 20 atomes C, éventuellement avec des fractions aromatiques, et éventuellement avec un ou plusieurs hétéroatomes ;
R⁴ représente un groupe alkyle de 1 à 6 atomes C ;
R⁵ représente un groupe alkyle de 1 à 10 atomes C, qui comprend éventuellement un ou plusieurs oxygènes d'éther ;
n représente 2 ou 3 ou 4 ; et
x représente 0 ou 1.

11. Hydroxysilane de formule (IIa) 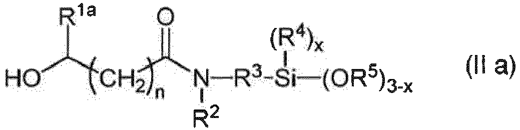 dans laquelle
R^{1a} représente n-butyle, n-pentyle, n-hexyle, n-heptyle ou n-octyle ;
R² représente un atome d'hydrogène ou un groupe alkyle de 1 à 12 atomes C, qui comprend éventuellement un oxygène d'éther ou un azote d'amine ;
R³ représente un radical alkylène ou cycloalkylène linéaire ou ramifié de 1 à 12 atomes C, éventuellement avec des fractions aromatiques, et éventuellement avec un ou plusieurs hétéroatomes ;
R⁴ représente un groupe alkyle de 1 à 6 atomes C ;
R⁵ représente un groupe alkyle de 1 à 10 atomes C, qui comprend éventuellement un ou plusieurs oxygènes d'éther ;
n représente 2 ou 3 ou 4 ; et
x représente 0 ou 1.

12. Isocyanatosilane de formule (IIIa) 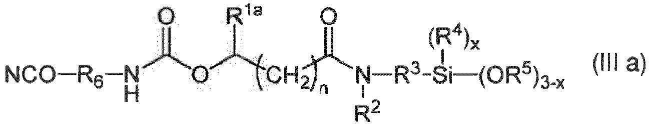 dans laquelle
R^{1a} représente n-butyle, n-pentyle, n-hexyle, n-heptyle ou n-octyle ;
R² représente un atome d'hydrogène ou un groupe alkyle de 1 à 12 atomes C, qui comprend éventuellement un oxygène d'éther ou un azote d'amine ;
R³ représente un radical alkylène ou cycloalkylène linéaire ou ramifié de 1 à 12 atomes C, éventuellement avec des fractions aromatiques, et éventuellement avec un ou plusieurs hétéroatomes ;
R⁴ représente un groupe alkyle de 1 à 6 atomes C ;
R⁵ représente un groupe alkyle de 1 à 10 atomes C, qui comprend éventuellement un ou plusieurs oxygènes d'éther ;
R⁶ représente un radical hydrocarboné bivalent de 4 à 16 atomes C ;
n représente 2 ou 3 ou 4 ; et
x représente 0 ou 1.

13. Composition durcissant à l'humidité contenant au moins un polymère selon l'une quelconque des revendications 1 à 8 et au moins un constituant supplémentaire.

14. Utilisation de la composition durcissant à l'humidité selon la revendication 13 en tant qu'adhésif élastique et/ou agent d'étanchéité élastique.

15. Composition durcie obtenue par durcissement de la composition selon la revendication 13 avec de l'humidité.
